# EUROPÄISCHE PATENTSCHRIFT

(11) **EP 1 809 699 B1**
(45) Veröffentlichungstag und Bekanntmachung des Hinweises auf die Patenterteilung: **25.02.2009**
(21) Anmeldenummer: 05803670.8
(22) Anmeldetag: 28.10.2005
(51) Int. Cl.: C08L 51/04, C08L 33/12, C08L 55/02, C08L 25/06, C08L 25/12, C08K 5/00

(54) **STABILISIERTE THERMOPLASTISCHE FORMMASSEN**
STABILISED THERMOPLASTIC MOULDING COMPOUNDS
MATIÈRES MOULABLES THERMOPLASTIQUES STABILISÉES

(30) Priorität: 02.11.2004 DE 102004052874
(43) Veröffentlichungstag der Anmeldung: 25.07.2007
(73) Patentinhaber: BASF SE, 67056 Ludwigshafen (DE)
(72) Erfinder: STORK, Martin, 68199 Mannheim (DE); BRUCHMANN, Bernd, 67251 Freinsheim (DE); MALZ, Hauke, 49356 Diepholz (DE); BREULMANN, Michael, 68782 Brühl (DE)
(74) Vertreter: Isenbruck, Günter
(86) Internationale Anmeldenummer: PCT/EP2005/011590
(87) Internationale Veröffentlichungsnummer: WO 2006/048206

(56) Entgegenhaltungen:
- WO-A-01/92391
- WO-A-20/05070987
- DE-A1- 3 800 294
- US-B1- 6 420 463
- POLYMER DEGRADATION AND STABILITY, Bd. 81, 2003, Seiten 453-461, XP002364870
- DATABASE WPI Section Ch, Week 200114 Derwent Publications Ltd., London, GB; Class A13, AN 1992-120216 XP002364881 & JP 03 130307 B2 (KANEGAFUCHI CHEM KK) 31. Januar 2001 (2001-01-31)

## Beschreibung

Die vorliegende Erfindung betrifft stabilisierte thermoplastische Formmassen, darin enthaltene Stabilisatoren sowie Verfahren zur Herstellung der thermoplastischen Formmassen.

Schlagzäh modifizierte Styrol/Acrylnitril-Polymerisate, wie ABS (Polybutadienkautschuk-Partikel, gepfropft mit Polystyrolacrylnitril, in Polystyrolacrylnitril-Matrix) und ASA (Polyalkylacrylatkautschuk, ansonsten aufgebaut wie ABS), werden bei einer Vielzahl von Anwendungen eingesetzt. Bevorzugt verwendet man sie zur Herstellung von Formkörpern, die gute mechanische Eigenschaften aufweisen sollen. Oft ist es erforderlich, durch Zugabe von Additiven den Formmassen bestimmte Eigenschaften zu verleihen, etwa Antistatizität, besonders gute Beständigkeit gegen Witterungseinflüsse usw.

Die FR-PS 1 239 902 offenbart Thermoplastformmassen, enthaltend ein Antistatikum und EO-PO-EO-Dreiblockcopolymere (EO = Ethylenoxid, PO = Propylenoxid).

Die EP-A 135 801 beschreibt Blends aus Polycarbonat, ABS oder ASA und einem EO-PO-EO-Dreiblockcopolymer mit bestimmten Molmassen der einzelnen Blöcke.

Die EP-A 536 483 offenbart ABS-Formmassen, die ein PO-Polymer enthalten, dessen Enden mit EO verkappt sind und das 1,4-Butylenterephthalat-Einheiten enthält.

Die US-PS 5 346 959 beschreibt Blends aus ABS, Styrol-Maleinsäureanhydrid-Copolymer und OH-funktionalisierten PO-EO-PO-Blockcopolymeren (Mittelblock aus EO).

Die DE-OS 16 940 101 beschreibt ABS-Formmassen, die mit einem phenolischen Stabilisator, Dilaurylthiodipropionat und C₁-C₂₀-Fettsäureestern (Butylstearat) stabilisiert sind.

Die GB-PS 1 369 589 offenbart Styrol-Butadien-Acrylnitril-Copolymere, die neben Asbestfasern auch phenolische Stabilisatoren und Dilaurylthiodipropionat enthalten.

Die EP-A 184 788 offenbart flammgeschützte ABS-Formmassen, die sterisch gehinderte Phenole und Costabilisatoren enthalten.

Die WO-A 95/02639 beschreibt die Stabilisierung von einem recyclierten styrolhaltigen Kunststoffmaterial aus Abfällen und Wertstoffsammlungen. Als Stabilisatoren werden sterisch gehinderte Phenole, Metalloxide/-hydroxide/-carbonate, Ester der Thiodipropionsäure und gegebenenfalls Metallsalze von Fettsäuren verwendet.

Die WO-A 94/07951 offenbart die Stabilisierung von Kunststoffen aus Abfall mit einer Mischung aus einem sterisch gehinderten Phenol, einem organischen Phosphit oder Phosphonit und Metalloxiden/-hydroxiden/-carbonaten.

Die EP-A 506 614 beschreibt die Stabilisierung von recyclierten Thermoplasten mit sterisch gehinderten Phenolen und Phosphorsäureestern.

Die EP-A 669 367 beschreibt ABS-Formmassen, die mit einem Trialkylphenol, einem sterisch gehinderten Phenol und optional Dilauryl- bzw. Distearylthiodipropionsäureester stabilisiert sind.

Die EP-A 712 894 offenbart ABS-Formmassen und erwähnt u.a. sterisch gehinderte Phenole als Stabilisatoren.

Die DE-OS 197 50 747 beschreibt Alterungsschutzmittel für Styrolco- und -terpolymere wie ABS, bestehend aus einem sterisch gehinderten Phenol, Dilauryl- und/oder Distearylthiodipropionat und einem Phosphit.

WO-A 01/92391 beschreibt stabilisierte thermoplastische Formmassen, enthaltend, bezogen auf die Komponenten A) bis F),
A) 5 bis 70 Gew.-% mindestens eines Pfropfcopolymerisates A) aus, bezogen auf A,
   a1) 10 bis 90 Gew.-% mindestens einer kautschukelastischen Pfropfgrundlage mit einer Glasübergangstemperatur unter 0°C und
   a2) 10 bis 90 Gew.-% mindestens einer Pfropfauflage aus, bezogen auf a2),
   a21) 50 bis 100 Gew.-% mindestens einer Styrolverbindung,
   a22) 0 bis 50 Gew.-% Acrylnitril, Methacrylnitril oder deren Mischungen,
   a23) 0 bis 50 Gew.-% mindestens eines weiteren monoethylenisch ungesättigten Monomeren,
B) 29 bis 90 Gew.-% eines harten Copolymerisates aus, bezogen auf B),
   b1) 50 bis 100 Gew.-% mindestens einer Styrolverbindung,
   b2) 0 bis 50 Gew.-% Acrylnitril, Methacrylnitril oder deren Mischungen,
   b3) 0 bis 50 Gew.-% mindestens eines weiteren monoethylenisch ungesättigten Monomeren,
C) 0 bis 5 Gew.-% mindestens eines Dreiblockcopolymeren X-Y-X mit einem Mittelblock Y aus Propylenoxideinheiten und endständigen Blöcken X aus Ethylenoxideinheiten,
D) 0,01 bis 5 Gew.-% mindestens eines butylierten Reaktionsproduktes von p-Cresol mit Dicyclopentadien der Formel (I) 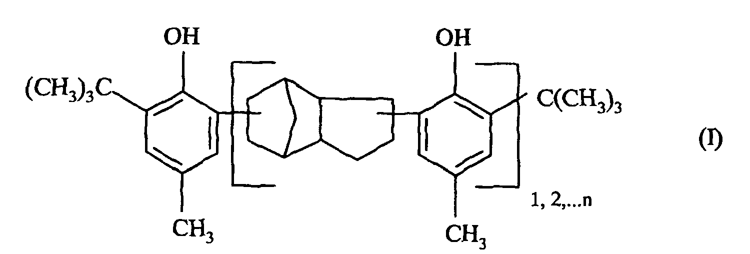 mit n ≤ 10,
E) 0,01 bis 5 Gew.-% mindestens eines Thiocarbonsäureesters,
F) 0,01 bis 5 Gew.-% mindestens eines Alkalimetallsalzes oder Erdalkalimetallsalzes einer C₆-C₂₀-Carbonsäure,
G) 0 bis 30 Gew.-%, bezogen auf die Komponenten A) bis G), weiterer üblicher Zusatzstoffe,
wobei die Formmassen nach 100 Stunden Belichtung und Bewitterung nach ISO 4892/2, Verfahren A, Schwarztafeltemperatur 65 °C, bei der Farbmessung nach CIE-Lab gemäß DIN 6274 und DIN 5033 einen db*-Wert nach Bewitterung von weniger als + 5,0 aufweisen.

Allen Formmassen des Standes der Technik ist gemeinsam, dass die Stabilisierung der Formmassen gegenüber Witterung (Regen, UV-Licht) und Alterung in der Wärme (Wärmelagerung) unzureichend ist oder nur auf Kosten anderer vorteilhafter Eigenschaften, insbesondere auf Kosten guter mechanischer Eigenschaften, beispielsweise der Zähigkeit, erreicht wird.

Ferner weisen die Formmassen des Standes der Technik nachteilige Farbabweichungen auf. Daher sollen durch die vorliegende Erfindung Formmassen bereitgestellt werden, welche insbesondere naturfarben sind (also ohne eine die Eigenfarbe der Formmasse überdeckende Zugabe von Farbmitteln auskommen) und eine bessere Bewitterungsbeständigkeit und Wärmealterungsbeständigkeit aufweisen als die Formmassen des Standes der Technik. Die thermoplastischen Formmassen sollen zugleich auch ein ausgewogenes Profil mechanischer Eigenschaften, insbesondere eine hohe Zähigkeit auch nach der Bewitterung und Wärmelagerung, aufweisen.

Weiterhin sollen die erfindungsgemäßen Formmassen gewährleisten, dass die aus ihnen hergestellten Formteile eine verminderte Neigung zur Ausbildung von Staubfiguren aufweisen, wenn die Formteile in staubiger Atmosphäre gelagert werden. Außerdem sollten die Formmassen eine verbesserte Farbmitteldispergierung aufweisen, d.h. Farbmittel, z.B. Pigmente, sollen sich in den Formmassen besonders gleichmäßig dispergieren lassen. Schließlich sollen die Formmassen bei der Spritzgussverarbeitung eine bessere Entformbarkeit als Formmassen des Standes der Technik aufweisen. Gelöst werden diese Aufgaben gemäß einer ersten Ausführungsform durch thermoplastische Formmassen, enthaltend, jeweils bezogen auf die Komponenten A) und B),
A) 5 bis 70 Gew.-%, vorzugsweise 8 bis 65 Gew.-%, besonders bevorzugt 10 bis 60 Gew.-%, mindestens eines Pfropfcopolymerisates A) aus, jeweils bezogen auf A),
   a1) 10 bis 90 Gew.-% mindestens einer kautschukelastischen Pfropfgrundlage mit einer Glasübergangstemperatur unter 0°C,
   a2) 10 bis 90 Gew.-% mindestens einer Pfropfauflage aus, jeweils bezogen auf a2), a21) 50 bis 100 Gew.-% mindestens einer Styrolverbindung,
   a22) 0 bis 50 Gew.-% Acrylnitril, Methacrylnitril oder deren Mischungen,
   a23) 0 bis 50 Gew.-% mindestens eines weiteren monoethylenisch ungesättigten Monomeren,
B) 30 bis 90 Gew.-%, vorzugsweise 34 bis 88 Gew.-%, besonders bevorzugt 39 bis 85 Gew.-%, eines harten Copolymerisates aus, jeweils bezogen auf B),
   b1) 50 bis 100 Gew.-% mindestens einer Styrolverbindung,
   b2) 0 bis 50 Gew.-% Acrylnitril, Methacrylnitril oder deren Mischungen,
   b3) 0 bis 50 Gew.-% mindestens eines weiteren monoethylenisch ungesättigten Monomeren.

Die erfindungsgemäßen thermoplastischen Formmassen gemäß der ersten Ausführungsform sind dann dadurch gekennzeichnet, dass die thermoplastischen Formmassen zusätzlich mindestens einen Stabilisator enthalten, der aufgebaut ist aus
(1) einem oder mehreren Polyisocyanat(en) mit im Mittel 2,2 bis 8 Isocyanatgruppen pro Molekül,
(2) und mindestens einer Wirkstoffgruppe (2a), (2b) oder (2c) mit
   (2a) 0,1 bis 1,0 Mol einer oder mehrerer Wirkstoffgruppe(n), pro Mol Isocyanatgruppen, auf Phenolbasis,
   (2b) 0,1 bis 1,0 Mol einer oder mehrer Wirkstoffgruppe(n), pro Mol Isocyanatgruppen, auf Basis von sterisch gehinderten Aminen,
   (2c) 0,1 bis 1,0 Mol in Summe mindestens zweier unterschiedlicher Wirkstoffgruppen, pro Mol Isocyanatgruppe(n), wobei eine Wirkstoffgruppe auf Phenol basiert und die andere Wirkstoffgruppe auf sterisch gehinderten Aminen basiert,
   wobei die Wirkstoffgruppe(n) Kunststoffe gegen Schädigung durch Wärme, UV-Strahlung, Oxidation, Hydrolyse oder mechanische Einwirkung bei der Verarbeitung schützen, und
(3) pro Mol Isocyanatgruppen 0 bis 0,9 Mol einer oder mehrerer Hilfsgruppen, welche die Eigenschaften des Stabilisators modifizieren, wobei die Hilfsgruppen über eine funktionelle Gruppe B, die mit den Isocyanatgruppen reagieren kann, an die Polyisocyanate angekoppelt sind.

Gelöst werden diese Aufgaben gemäß einer zweiten Ausführungsform auch durch thermoplastische Formmassen, enthaltend, jeweils bezogen auf Summe der Komponenten A), B') und B",
A') 5 bis 70 Gew.-%, vorzugsweise 8 bis 65 Gew.-%, besonders bevorzugt 10 bis 60 Gew.-%, mindestens eines Pfropfcopolymerisates A) aus, jeweils bezogen auf A'),
   a1') 10 bis 90 Gew.-% mindestens einer kautschukelastischen Pfropfgrundlage mit einer Glasübergangstemperatur unter 0 °C,
   a2') 10 bis 90 Gew.-% mindestens einer Pfropfauflage aus, jeweils bezogen auf a2'),
   a21) 5 bis 85 Gew.-% mindestens einer Styrolverbindung,
   a22) 0 bis 50 Gew.-% Acrylnitril, Methacrylnitril oder deren Mischungen,
   a23) 0 bis 50 Gew.-% mindestens eines weiteren monoethylenisch ungesättigten Monomeren.
   a24) 15 bis 95 Gew.-% Alkylmethacrylat,
B') 0 bis 65 Gew.-%, vorzugsweise 10 bis 50 Gew.-%, besonders bevorzugt 25 bis 45 Gew.-%, eines Alkylmethacrylat-Polymerisates, erhältlich durch Polymerisation einer Mischung, bestehend aus, jeweils bezogen auf B'),
   b1') 50 bis 100 Gew.-% Alkylmethacrylat,
   b2') 0 bis 15 Gew.-% eines C₁-C₈-Alkylesters der Acrylsäure,
   b3') 0 bis 50 Gew.-% mindestens eines weiteren monoethylenisch ungesättigten Monomeren und
B") 0 bis 65 Gew.-%, vorzugsweise 10 bis 50 Gew.-%, besonders bevorzugt 25 bis 45 Gew.-% eines Copolymerisates, erhältlich durch Polymerisation einer Mischung, bestehend aus, jeweils bezogen auf B"),
   b1") bis 100 Gew.-% eines vinylaromatischen Monomeren,
   b2") bis 50 Gew.-% Acrylnitril, Methacrylnitril oder deren Mischungen und
   b3") bis 50 Gew.-% mindestens eines weiteren monoethylenisch ungesättigten Monomeren.

Die erfindungsgemäßen thermoplastischen Formmassen gemäß der zweiten Ausführungsform sind dann dadurch gekennzeichnet, dass die thermoplastischen Formmassen zusätzlich mindestens einen Stabilisator enthalten, der aufgebaut ist aus
(1) einem oder mehreren Polyisocyanat(en) mit im 2,2 bis 8 Isocyanatgruppen pro Molekül
(2) und mindestens einer Wirkstoffgruppe (2a), (2b) oder (2c) mit
   (2a) 0,1 bis 1,0 Mol einer oder mehrerer Wirkstoffgruppe(n), pro Mol Isocyanatgruppen, auf Phenolbasis,
   (2b) 0,1 bis 1,0 Mol einer oder mehrer Wirkstoffgruppe(n), pro Mol Isocyanatgruppen, auf Basis von sterisch gehinderten Aminen,
   (2c) 0,1 bis 1,0 Mol in Summe mindestens zweier unterschiedlicher Wirkstoffgruppen, pro Mol Isocyanatgruppen, wobei eine Wirkstoffgruppe auf Phenol basiert und die andere Wirkstoffgruppe auf sterisch gehinderten Aminen basiert,
   wobei die Wirkstoffgruppe(n) Kunststoffe gegen Schädigung durch Wärme, UV-Strahlung, Oxidation, Hydrolyse oder mechanische Einwirkung bei der Verarbeitung schützen, und
(3) pro Mol Isocyanatgruppen 0 bis 0,9 einer oder mehrerer Hilfsgruppen, welche die Eigenschaften des Stabilisators modifizieren, wobei die Hilfsgruppen über eine funktionelle Gruppe B, die mit den Isocyanatgruppen reagieren kann, an die Polyisocyanate angekoppelt sind.

Die Ausführungsformen der vorliegenden Erfindung unterscheiden sich untereinander hinsichtlich der Komponenten B) bzw. B') und B"), wobei die Komponente B) in der ersten Ausführungsform ein hartes Copolymerisat bildet, während in der zweiten Ausführungsform das harte Copolymerisat von den Komponenten B') und B") gebildet wird.

Die folgenden Ausführungen beziehen sich nunmehr auf die thermoplastischen Formmassen gemäß erster und gemäß zweiter Ausführungsform, sofern nicht besonders für nur eine Ausführungsform geltend gekennzeichnet.

Die erfindungsgemäßen thermoplastischen Formmassen können üblich Zusatzstoffe in den folgenden Bereichen, jeweils bezogen auf die Komponenten A) sowie B) bzw. A'), B') sowie B") und die jeweiligen Zusatzstoffe, enthalten. Beispiele hierfür sind:
C) 0 bis 5 Gew.-% mindestens eines Dreiblockcopolymeren X-Y-X mit einem Mittelblock Y aus Propylenoxideinheiten und endständigen Blöcken X aus Ethylenoxideinheiten,
D) 0 bis 5 Gew.-% mindestens eines butylierten Reaktionsproduktes von p-Kresol mit Dicyclopentadien der Formel (I) 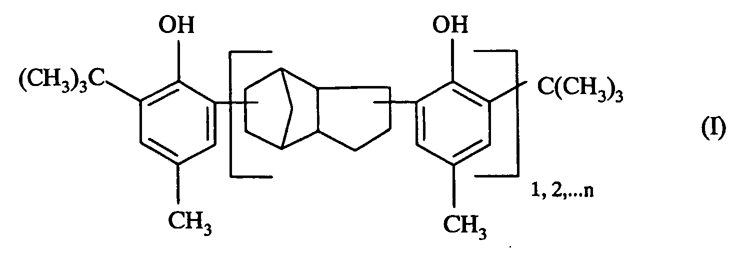 mit n ≤ 10,
E) 0 bis 5 Gew.-% mindestens eines Thiocarbonsäureesters,
F) 0 bis 5 Gew.-% mindestens eines Alkalimetallsalzes oder Erdalkalimetallsalzes einer C₆-C₂₀-Carbonsäure.
G) 0 bis 30 Gew.-% weiterer üblicher Zusatzstoffe.

In einer bevorzugten Ausführungsform der erfindungsgemäßen Formmassen gemäß der ersten Ausführungsform beträgt, jeweils bezogen auf die Komponenten A) bis G),
- der Anteil der Komponente A) 5 bis 70 Gew.-%, insbesondere 8 bis 65 Gew.-%, besonders bevorzugt 10 bis 60 Gew.-%,
- der Anteil der Komponente B) 29 bis 90 Gew.-%, insbesondere 34 bis 88 Gew.-%, besonders bevorzugt 39 bis 85 Gew.-%,
- der Anteil der Komponente C) 0 bis 5 Gew.-%, insbesondere 0,01 bis 5 Gew.-%, besonders bevorzugt 0,01 bis 4 Gew.-%, speziell 0,01 bis 3 Gew.-%,
- der Anteil der Komponente D) 0,01 bis 5 Gew.-%, insbesondere 0,03 bis 4 Gew.-%, besonders bevorzugt 0,05 bis 3 Gew.-%,
- der Anteil der Komponente E) 0,01 bis 5 Gew.-%, insbesondere 0,03 bis 4 Gew.-%, besonders bevorzugt 0,05 bis 3 Gew.-%,
- der Anteil der Komponente F) 0,01 bis 5 Gew.-%, insbesondere 0,02 bis 4 Gew.-%, besonders bevorzugt 0,1 bis 3 Gew.-%,
- der Anteil der Komponente G), bezogen auf die Komponenten A) bis G), 0 bis 30 Gew.-%, insbesondere 0 bis 25 Gew.-%, besonders bevorzugt 0 bis 20 Gew.-%.

In einer bevorzugten Ausführungsform der erfindungsgemäßen Formmassen gemäß der zweiten Ausführungsform beträgt, jeweils bezogen auf die Komponenten A) bis G),
- der Anteil der Komponente A) 5 bis 70 Gew.-%, insbesondere 8 bis 65 Gew.-%, besonders bevorzugt 10 bis 60 Gew.-%,
- der Anteil der Komponente B') 0 bis 65 Gew.-%, insbesondere 10 bis 50 Gew.-%, besonders bevorzugt 25 bis 45 Gew.-%,
- der Anteil der Komponente B") 0 bis 65 Gew.-%, insbesondere 10 bis 50 Gew.-%, besonders bevorzugt 25 bis 45 Gew.-%,
- der Anteil der Komponente C) 0 bis 5 Gew.-%, insbesondere 0,01 bis 5 Gew.-%, besonders bevorzugt 0,01 bis 4 Gew.-%, speziell 0,01 bis 3 Gew.-%,
- der Anteil der Komponente D) 0,01 bis 5 Gew.-%, insbesondere 0,03 bis 4 Gew.-%, besonders bevorzugt 0,05 bis 3 Gew.-%,
- der Anteil der Komponente E) 0,01 bis 5 Gew.-%, insbesondere 0,03 bis 4 Gew.-%, besonders bevorzugt 0,05 bis 3 Gew.-%,
- der Anteil der Komponente F) 0,01 bis 5 Gew.-%, insbesondere 0,02 bis 4 Gew.-%, besonders bevorzugt 0,1 bis 3 Gew.-%,
- der Anteil der Komponente G), bezogen auf die Komponenten A) bis G), 0 bis 30 Gew.-%, insbesondere 0 bis 25 Gew.-%, besonders bevorzugt 0 bis 20 Gew.-%.

Es versteht sich, dass sich die Summe der Massen aller Komponenten in beiden Ausführungsformen jeweils zu 100 Gew.-% ergänzt.

### Komponente A) bzw. A')

Komponente A) bzw. A') ist ein Pfropfcopolymerisat mit einer kautschukelastischen teilchenförmigen Pfropfgrundlage a1) bzw. a1') mit einer Glasübergangstemperatur unter 0°C, gemessen mit der Differential Scanning Calorimetry (DSC) gemäß DIN 53765. Dabei kann die Pfropfgrundlage aus allen bekannten geeigneten kautschukelastischen Polymeren ausgewählt sein. Vorzugsweise handelt es sich um Dien-, Acrylat-, EPDM-, Siloxan- oder andere Kautschuke.

Die Pfropfgrundlage ist in einer Menge von 10 bis 90 Gew.-%, vorzugsweise 15 bis 85 Gew.-%, besonders bevorzugt 20 bis 80 Gew.-%, jeweils bezogen auf die Komponente A) bzw. A'), in der Komponente A) bzw. A') enthalten.

Vorzugsweise ist Komponente a1) bzw. a1') mindestens ein (Co)Polymerisat aus, jeweils bezogen auf a1) bzw. a1')
a11) 60 bis 100 Gew.-%, besonders bevorzugt 70 bis 100 Gew.-%, mindestens eines konjugierten Diens oder C₁₋₁₀-Alkylacrylats oder deren Mischungen,
a12) 0 bis 35 Gew.-%, besonders bevorzugt 0 bis 30 Gew.-%, mindestens eines weiteren monoethylenisch ungesättigten Monomeren,
a13) 0 bis 10 Gew.-%, besonders bevorzugt 0 bis 5 Gew.-%, mindestens eines vernetzenden Monomeren.

Als Monomere a11) kommen im Allgemeinen Butadien, Isopren, Chloropren oder Mischungen davon wie auch die nachstehend ausgeführten C₁₋₁₀-Alkylacrylate und Mischungen davon in Betracht. Vorzugsweise verwendet man Butadien oder Isopren oder deren Mischungen, besonders bevorzugt Butadien, n-Butylacrylat, 2-Ethylhexylacrylat oder deren Gemische, insbesondere n-Butylacrylat. Speziell verwendet man Butadien oder n-Butylacrylat.

Als Komponente a12) können Monomere in der Komponente a1) enthalten sein, welche die mechanischen und thermischen Eigenschaften der Pfropfgrundlage in einem gewissen Bereich variieren. Als Beispiele derartiger monoethylenisch ungesättigter Comonomere können Styrol, substituierte Styrole, Acrylnitril, Methacrylnitril, Acrylsäure, Methacrylsäure, Dicarbonsäuren wie Maleinsäure und Fumarsäure sowie deren Anhydride wie Maleinsäureanhydrid, Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid, C₁₋₁₀-Alkylester der Acrylsäure wie Methylacrylat, Ethylacrylat, n-Propylacrylat, i-Propylacrylat, n-Butylacrylat, Isobutylacrylat, sec.-Butylacrylat, tert.-Butylacrylat, Ethylhexylacrylat, die entsprechenden C₁₋₁₀-Alkylester der Methacrylsäure sowie Hydroxyethylacrylat, aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat sowie 2-Phenoxyethylmethacrylat, N-substituierte Maleinimide wie N-Methyl-, N-Phenyl- und N-Cyclohexylmaleinimid, ungesättigte Ether wie Vinylmethylether sowie Mischungen davon genannt werden.

Bevorzugt werden Styrol, α-Methylstyrol, n-Butylacrylat, Methylmethacrylat (MMA) oder deren Mischungen als Komponente a12) eingesetzt, insbesondere Styrol und n-Butylacrylat oder deren Mischungen, speziell Styrol. Sofern eine Komponente a12), jedoch keine Komponente a13) eingesetzt wird, beträgt der Anteil der Komponente a11) vorzugsweise 70 bis 99,9 Gew.-%, besonders bevorzugt 90 bis 99 Gew.-%, und der Anteil der Komponente a12) vorzugsweise 0,1 bis 30 Gew.-%, besonders bevorzugt 1 bis 10 Gew.-%, jeweils bezogen auf a1) bzw. a1'). Besonders bevorzugt sind Butadien/Styrol- und n-Butylacrylat/Styrol-Copolymere in dem angegebenen Mengenbereich.

Beispiel für vernetzende Monomere der Komponente a13) sind Divinylverbindungen wie Divinylbenzol, Diallylverbindungen wie Diallylmaleat, Allylester der Acryl- und Methacrylsäure, Dihydrodicyclopentadienylacrylat (DCPA), Divinylester von Dicarbonsäuren wie der Bernsteinsäure und Adipinsäure, Diallyl- und Divinylether bifunktioneller Alkohole wie des Ethylenglykols und Butan-1,4-diols.

Ferner enthält die Komponente A) bzw. A') eine Pfropfauflage in einer Menge von 10 bis 90 Gew.-%, vorzugsweise 15 bis 85 Gew.-%, besonders bevorzugt 20 bis 80 Gew.-%, jeweils bezogen auf A) bzw. A').

Die Pfropfauflage a2) (erste Ausführungsform) erhält man aus, jeweils bezogen auf a2),
a21) 50 bis 100 Gew.-%, besonders bevorzugt 55 bis 90 Gew.-%, insbesondere 60 bis 85 Gew.-%, mindestens einer Styrolverbindung,
a22) 0 bis 50 Gew.-%, besonders bevorzugt 10 bis 45 Gew.-%, insbesondere 15 bis 40 Gew.-%, Acrylnitril, Methacrylnitril oder deren Mischungen,
a23) 0 bis 50 Gew.-%, besonders bevorzugt 0 bis 30 Gew.-%, insbesondere 0 bis 10 Gew.-%, mindestens eines weiteren monoethylenisch ungesättigten Monomeren.

Die Pfropfauflage a2') (zweite Ausführungsform) erhält man aus, jeweils bezogen auf a2'),
a21) 5 bis 85 Gew.-%, bevorzugt 10 bis 65 Gew.-%, mindestens einer Styrolverbindung,
a22) 0 bis 50 Gew.-%, besonders bevorzugt 0 bis 30 Gew.-%, insbesondere 0 bis 15 Gew.-%, Acrylnitril, Methacrylnitril oder deren Mischungen,
a23) 0 bis 50 Gew.-%, besonders bevorzugt 0 bis 45 Gew.-%, insbesondere 0 bis 40 Gew.-%, mindestens eines weiteren monoethylenisch ungesättigten Monomeren,
a24) 5 bis 95 Gew.-%, insbesondere 10 bis 65 Gew.-%, Alkylmethacrylat.

Die Pfropfauflage a2) bzw. a2') enthält mindestens eine Styrolverbindung a21). Bevorzugt sind Styrol, α-Methylstyrol oder andere substituierte Styrole, wobei diese Styrole am aromatischen System ein- oder mehrfach C₁-C₈-alkylsubstituiert sein können. Besonders bevorzugt verwendet man Styrol oder α-Methylstyrol oder deren Mischungen, ganz besonders bevorzugt Styrol.

Als weitere monoethylenisch ungesättigte Monomeren a23) kommen diejenigen in Betracht, die bereits als Monomere a12) genannt wurden, vorzugsweise Methylmethacrylat (MMA) und n-Butylacrylat, besonders bevorzugt Methylmethacrylat.

Die Pfropfauflage a2) ist vorzugsweise ein Styrol/Acrylnitril-Copolymerisat, insbesondere mit einem Acrylnitrilgehalt von 15 bis 40 Gew.-%. In einer besonderen, ebenfalls bevorzugten Ausführungsform enthält die Pfropfauflage a2) 16 bis 30 Gew.-%, vorzugsweise 17 bis 28 Gew.-%, besonders bevorzugt 18 bis 25 Gew.-%, Acrylnitril.

Üblicherweise werden die Pfropfcopolymerisate A) bzw. A') nach dem Verfahren der Emulsionspolymerisation hergestellt. Dabei polymerisiert man im Allgemeinen bei einer Temperatur von 20 bis 100°C, bevorzugt 30 bis 80°C. Häufig werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise verwendet man die Alkalimetallsalze, insbesondere die Natrium- oder Kaliumsalze von Alkylsulfonaten oder Fettsäuren mit 10 bis 18 Kohlenstoffatomen. In der Regel werden die Emulgatoren in Mengen von 0,2 bis 5 Gew.-%, insbesondere von 0,3 bis 3 Gew.-%, bezogen auf die bei der Herstellung der Pfropfgrundlage verwendeten Monomere, eingesetzt.

Vorzugsweise verwendet man zur Herstellung der Dispersion so viel Wasser, dass die fertige Dispersion einen Feststoffgehalt von 20 bis 55 Gew.-% aufweist. Üblicherweise wird bei einem Wasser/Monomeren-Verhältnis von 2:1 bis 0,7:1 gearbeitet.

Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide, vorzugsweise Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. In der Regel werden die Polymerisationsinitiatoren in einer Menge von 0,1 bis 1 Gew.-%, bezogen auf die Pfropfgrundlage-Monomeren, eingesetzt.

Die Radikalbildner und auch die Emulgatoren werden dem Reaktionsansatz beispielsweise diskontinuierlich als Gesamtmenge zu Beginn der Reaktion oder aufgeteilt in mehrere Portionen absatzweise zu Beginn und zu einem oder mehreren späteren Zeitpunkten oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie Ethylhexylthioglycolat, n- oder t-Dodecylmercaptan oder andere Mercaptane, Terpinole und dimeres Methylstyrol oder andere zur Regelung des Molekulargewichts geeignete Verbindungen mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Natriumpyrophosphat, Na₂HPO₄/NaH₂PO₄, Natriumhydrogencarbonat oder Puffer auf Basis von Citronensäure/Citrat, mitverwenden. Molekulargewichtsregler und Puffersubstanzen werden in den üblichen Mengen eingesetzt, so dass sich nähere Angaben hierzu erübrigen.

Auch kann es vorteilhaft sein, zur Einstellung der Teilchengrößen und ihrer Verteilung weitere Elektrolyte (insbesondere Salze) zu verwenden.

Man kann die Pfropfgrundlage in einer besonderen Ausführungsform auch durch Polymerisation der Monomeren a1) bzw. a1') in Gegenwart eines feinteiligen Latex herstellen (sog. "Saatlatex-Fahrweise" der Polymerisation). Dieser Latex wird vorgelegt und kann aus kautschukelastische Polymere bildenden Monomeren oder auch aus anderen Monomeren, wie sie bereits genannt wurden, bestehen. Geeignete Saatlatizes bestehen beispielsweise aus Polybutadien oder Polystyrol.

In einer anderen bevorzugten Ausführungsform kann man die Pfropfgrundlage a1) bzw. a1') im so genannten Zulaufverfahren herstellen. Bei diesem Verfahren wird ein bestimmter Anteil der Monomeren vorgelegt und die Polymerisation gestartet, wonach man den Rest der Monomeren ("Zulaufanteil") a1) bzw. a1') als Zulauf während der Polymerisation zufügt. Die Zulaufparameter (Gestalt der Gradienten, Menge, Dauer etc.) hängen von den anderen Polymerisationsbedingungen ab. Sinngemäß gelten auch hier die zur Zugabeweise des Radikalstarters bzw. Emulgators gemachten Ausführungen.

Weiterhin eignen sich auch Pfropfpolymerisate mit mehreren "weichen" und "harten" Schalen.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfpolymerisates A) bzw. A') eine mittlere Teilchengröße, definiert durch den d50-Wert der Teilchengrößenverteilung, von 80 bis 800 nm, bevorzugt 80 bis 500 nm, besonders bevorzugt 85 bis 400 nm, aufweist.

Gemäß einer Ausführungsform der Erfindung stimmt man die Reaktionsbedingungen so aufeinander ab, dass die Polymerisat-Teilchen eine bimodale oder polymodale Teilchengrößenverteilung aufweisen, also eine Größenverteilung mit mindestens zwei mehr oder weniger ausgeprägten Maxima.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren, welche den Kern aufbauen, bis zu einem Umsatz von üblicherweise mindestens 90 %, bevorzugt größer 95 %, jeweils bezogen auf die eingesetzten Monomeren. Dieser Umsatz ist in der Regel nach 4 bis 20 Stunden erreicht. Der erhaltene Kautschuklatex hat eine mittlere Teilchengröße d50 von maximal 200 nm und eine enge Teilchengrößenverteilung (nahezu monodisperses System).

In der zweiten Stufe wird der Kauschuklatex agglomeriert. Dies geschieht in der Regel durch Zugabe einer Dispersion eines Acrylesterpolymerisates. Vorzugsweise werden Dispersionen von Copolymerisaten von (C₁-C₄-Alkyl-)estern der Acrylsäure, vorzugsweise von Ethylacrylat, mit 0,1 bis 10 Gew.-% polare Polymerisate bildenden Monomeren, wie Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 90 bis 96 % Ethylacrylat und 4 bis 10 % Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im Allgemeinen zwischen 3 und 40 Gew.-% liegen. Bei der Agglomeration werden 0,2 bis 20, vorzugsweise 1 bis 5 Gew.-%, der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Zugabe dauert üblicherweise etwa 1 bis 30 Minuten bei einer Temperatur zwischen 20 und 90°C, vorzugsweise zwischen 30 und 75°C.

Außer mittels einer Acrylesterpolymerisat-Dispersion kann der Kautschuklatex auch durch andere Agglomeriermittel wie Essigsäureanhydrid agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so dass eine bimodale Verteilung entsteht. Dabei liegen nach der Agglomeration im Allgemeinen mehr als 50 %, vorzugsweise zwischen 60 und 95 %, der Teilchen (Zahlen-Verteilung) im nicht agglomerierten Zustand vor. Der erhaltene teilagglomerierte Kautschuklatex ist verhältnismäßig stabil, so dass er ohne weiteres gelagert und transportiert werden kann, ohne dass Koagulation eintritt.

Um eine bimodale Teilchengrößenverteilung des Pfropfpolymerisates A) bzw. A') zu erzielen, ist es auch möglich, zwei verschiedene Pfropfpolymerisate AA) und AB), die sich in ihrer mittleren Teilchengröße unterscheiden, getrennt voneinander in üblicher Weise herzustellen und die Pfropfpolymerisate AA) und AB) im gewünschten Mengenverhältnis zusammenzugeben.

Die Herstellung der Pfropfauflage a2) bzw. a2') kann unter den gleichen Bedingungen wie die Herstellung der Pfropfgrundlage a1) bzw. a1') erfolgen, wobei man die Auflage a2) bzw. a2') in einem oder mehreren Verfahrensschritten herstellen kann. Beispielsweise kann man bei einer zweistufigen Pfropfung zunächst Styrol bzw. α-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform.

Weitere Einzelheiten zur Herstellung der Pfropfpolymerisate A) bzw. A') sind in den DE-A 12 60 135, DE-A 31 49 358 sowie EP-A 735 063 beschrieben, welche durch Bezugnahme in die vorliegende Erfindung eingeschlossen wird.

Es ist vorteilhaft, die Pfropfpolymerisation auf die Pfropfgrundlage a1) bzw. a1') wiederum in wässriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage a1) bzw. a1') verwendeten Emulgatoren bzw. Initiatoren nicht identisch sein. So kann es z.B. zweckmäßig sein, als Initiator für die Herstellung der Pfropfgrundlage a1) bzw. a1') ein Persulfat zu verwendet, zur Polymerisation der Pfropfhülle a2) bzw. a2') jedoch ein Redoxinitiatorsystem einzusetzen. Im Übrigen gilt für die Wahl von Emulgator, Initiator und Polymerisationshilfsstoffen das bei der Pfropfgrundlage a1) bzw. a1') Gesagte. Das aufzupfropfende Monomerengemisch kann dem Reaktionsgemisch auf einmal, absatzweise in mehreren Stufen oder vorzugsweise kontinuierlich während eines bestimmten Zeitintervalls der Polymerisation zugegeben werden.

Soweit bei der Pfropfgrundlage a1) bzw. a1') nicht gepfropfte Polymere aus den Monomeren a2) bzw. a2') entstehen, werden die Mengen, die in der Regel unter 10 Gew.-% von a2) bzw. a2') liegen, der Masse der Komponente A) bzw. A') zugeordnet.

### Komponente B)

Komponente B) ist ein hartes Copolymerisat aus, bezogen auf B),
b1) 50 bis 100 Gew.-%, besonders bevorzugt 55 bis 90 Gew.-%, insbesondere 60 bis 85 Gew.-%, mindestens einer Styrolverbindung,
b2) 0 bis 50 Gew.-%, besonders bevorzugt 10 bis 45 Gew.-%, insbesondere 15 bis 40 Gew.-%, Acrylnitril oder Methacrylnitril oder deren Mischungen,
b3) 0 bis 50 Gew.-%, besonders bevorzugt 0 bis 30 Gew.-%, insbesondere 0 bis 20 Gew.-%, mindestens eines weiteren monoethylenisch ungesättigten Monomeren.

Komponente B) weist vorzugsweise eine Viskositätszahl VZ (ermittelt nach DIN 53726 bei 25°C, 0,5 Gew.-% in Dimethylformamid) von 50 bis 120 ml/g, besonders bevorzugt 52 bis 110 ml/g, insbesondere 55 bis 105 ml/g, auf.

Als Styrolverbindung b1) kommen die für a21) genannten Monomere in Betracht, insbesondere Styrol, α-Methylstyrol oder deren Mischungen. Bevorzugt beträgt der Anteil des α-Methylstyrols in einer solchen Mischung bis zu 50 Gew.-%, bezogen auf b1). Besonders bevorzugt verwendet man Styrol allein.

Als weitere monoethylenisch ungesättigte Monomere b3) kommen die für a12) bereits genannten Monomere in Betracht, insbesondere MMA sowie N-Alkyl- und N-Arylmaleinimide wie z.B. N-Phenylmaleinimid.

Bevorzugt handelt es sich bei B) um ein Styrol/Acrylnitril-Copolymerisat. Besonders bevorzugt verwendet man ein Styrol-Acrylnitril-Copolymerisat mit 15 bis 40 Gew.-%, insbesondere 20 bis 33 Gew.-%, Acrylnitril als Komponente b2). Vorzugsweise enthält das Copolymerisat 22 bis 31 Gew.-%, besonders bevorzugt 23 bis 29 Gew.-%, Acrylnitril.

Derartige Copolymerisate erhält man in bekannter Weise durch Masse-, Lösungs-, Suspensions-, Fällungs- oder Emulsionspolymerisation, wobei Masse- und Lösungspolymerisation bevorzugt sind. Einzelheiten dieser Verfahren sind beispielsweise im Kunststoffhandbuch, Herausgeber R. Vieweg und G. Daumiller, Band V "Polystyrol", Carl-Hanser-Verlag München 1969, Seite 118 ff. beschrieben.

Bevorzugt sind thermoplastische Formmassen, bei denen die Komponente a11) Butadien und die Komponente B) ein Styrol-Acrylnitril-Copolymerisat mit 10 bis 50 Gew.-%, besonders bevorzugt 22 bis 33 Gew.-%, insbesondere 23 bis 29 Gew.-%, Acrylnitril ist.

### Komponente B')

Die in den erfindungsgemäßen thermoplastischen Formmassen verwendeten Alkylmethacrylat-Polymerisate (B') sind entweder Homopolymerisate aus Alkylmethacrylat oder Copolymerisate aus Alkylmethacrylat mit bis zu 15 Gew.-%, bezogen auf (B'), eines C₁-C₈-Alkylesters der Acrylsäure. Als Alkylmethacrylat besonders bevorzugt ist Methylmethacrylat (MMA).

Als C₁-C₈-Alkylester der Acrylsäure (Komponente b2')) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methylmethacrylat Polymerisate ein, deren Gewichtsmittel-Werte M_{w} der Molmassen im Bereich von 60.000 bis 300.000 g/mol liegen (bestimmt durch Lichtstreuung in Chloroform).

Ferner können die Komponenten B') 0 bis 50 Gew.-% mindestens eines weiteren monoethylenisch ungesättigten Monomeren, beispielsweise Acrylnitril, Methacrylnitril, Styrol, α-Methylotyrol oder deren Mischungen enthalten.

### Komponente B")

Die Komponente (B") ist ein Copolymerisat aus einem vinylaromatischen Monomeren (b1") einem Vinylcyanid (Acrylnitril, Methacrylnitril oder deren Mischungen) und mindestens eines weiteren monoethylenisch ungesättigten Monomeren in den zuvor angegebenen Mengenbereichen.

Als vinylaromatische Monomere (Komponente b1")) kann man Styrol, ein- bis dreifach mit C₁-C₈-Alkylresten substituiertes Styrol wie p-Methylstyrol oder tert.-Butylstyrol sowie α-Methylstyrol, bevorzugt jedoch Styrol, einsetzen.

Als Vinylcyanid (Komponente b2") kann man Acrylnitril und/oder Methacrylnitril, bevorzugt Acrylnitril, einsetzen.

Als monoethylenisch ungesättigte Monomere b3") kommen die für a12) bereits genannten Monomere in Betracht, insbesondere MMA sowie N-Alkyl- und N-Arylmaleinimide wie N-Phenylmaleinimid.

Außerhalb des oben angegebenen Bereiches der Zusammensetzung der Komponente (B") erhält man üblicherweise bei Verarbeitungstemperaturen über 240°C trübe Formmassen, die Schlieren aufweisen.

Die Copolymerisate (B") können nach bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei Copolymerisate (B") mit Molmassen M_{w} von 60.000 bis 300.000 g/mol, bestimmt durch Lichtstreuung in Dimethylformamid.

### Komponente C)

ist vorzugsweise ein EO-PO-EO-Dreiblockcopolymers (EO = Ethylenoxid, PO = Propylenoxid). Bevorzugt beträgt die mittlere Molmasse Mn des PO-Mittelblockes 2000 bis 4000, besonders bevorzugt 2200 bis 3800, insbesondere 2300 bis 3500, ganz besonders bevorzugt etwa 2300, etwa 2750 oder etwa 3250, jeweils ±10 %. Vorzugsweise beträgt im Mittel der Anteil der endständigen EO-Blöcke zusammen genommen 3 bis 28 Gew.-%, besonders bevorzugt 8 bis 24 Gew.-%, insbesondere etwa 8 bis 14 oder 18 bis 24 Gew.-%, jeweils bezogen auf C).

Die Herstellung der eingesetzten Dreiblockcopolymere der Formel X-Y-X kann in an sich bekannter Weise (N. Schönfeldt, Grenzflächenaktive Ethylenoxid-Addukte, wissenschaftliche Verlagsgesellschaft mbH Stuttgart, 1976, Seite 53 ff.) durch Polymerisation erfolgen, wobei zunächst ein mittelständiger Polypropylenoxidblock Y hergestellt wird, an dessen beiden Enden je ein Block X aus Ethylenoxideinheiten angelagert wird. Bei den vorstehend angegebenen Molekulargewichten handelt es sich in der Regel um die mittleren Molekulargewichte (Zahlenmittel Mₙ, beispielsweise bestimmt aus der OH-Zahl nach DIN 53240).

Bevorzugte Dreiblockcopolymere und deren Herstellung sind auch in EP-A 125 801 und EP-A 018 591 beschrieben.

Ein Beispiel für die Komponente C) ist das im Handel erhältliche Pluronic^{®} (Fa. BASF).

### Komponente D)

ist ein butyliertes Reaktionsprodukt von Kresol mit Dicyclopentadien der Formel (II)
(n ≤ 10, bevorzugt ≤ 6)

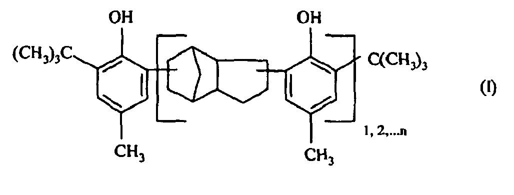

Bevorzugt verwendet man das Isomere der Formel (II) 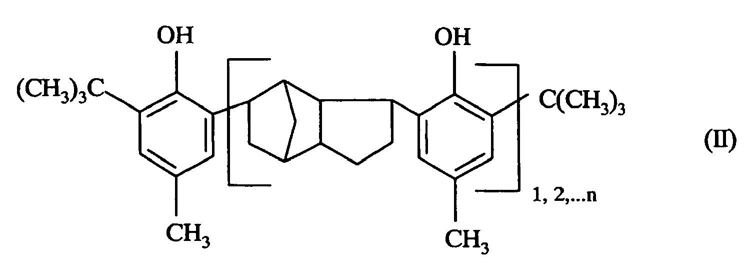 mit einer mittleren Molmasse von 600 bis 700.

Es ist im Handel z.B. als Santowhite^{®}ML (Monsanto), Lowinox^{®}22 CP46 bzw. LOWI-NOX^{®}CPL (Lowi/Great Lakes), Wingstay^{®}L (Goodyear) oder Ralox^{®}LC (Raschig) erhältlich.

### Komponente E)

ist ein Thiocarbonsäureester. Bevorzugt sind C₆-C₂₀-Fettalkoholester der Thiopropionsäure, besonders bevorzugt Stearylester und Laurylester. Ganz besonders bevorzugt verwendet man Thiodipropionsäuredilaurylester (= Dilaurylthiodipropionat), Thiodipropionsäuredistearylester (= Distearylthiodipropionat) oder deren Mischungen.

Thiodipropionsäuredilaurylester ist z.B. als Cyanox^{®}LTDP (American Cyanamid), Hostanox^{®}SE1 bzw. SE3 (Clariant); Irganox^{®}PS 800 (Ciba-Geigy), Lowinox^{®}DLTDP (Lowi) oder Sumilizer^{®}TPLR (Sumitomo) im Handel erhältlich. Thiodipropionsäuredistearylester ist z.B. als Cyanox^{®}STDP (American Cyanamid), Hostanox^{®}SE2 bzw. SE4 (Clariant), Irganox^{®}PS 802 (Ciby-Geigy), Lowinox^{®}DSTDP (Lowi) und Sumilizer^{®}TPS (Sumitomo) im Handel erhältlich. Auch die anderen geeigneten schwefelhaltigen Carbonsäureester sind bekannt und handelsüblich.

### Komponente F)

ist ein Alkalimetallsalz oder Erdalkalimetallsalz einer C₆-C₂₀-Carbonsäure. Bevorzugt sind die Salze des Natriums und Kaliums sowie des Magnesiums, Calciums und Zinks. Bevorzugte Carbonsäureester sind diejenigen der Stearinsäure, Laurylsäure, Ölsäure und Palmitinsäure. Besonders bevorzugt verwendet man Calciumstearat, Zinkstearat, Magnesiumstearat, Kaliumstearat und Natriumstearat, speziell Mg- und K-Stearat.

Diese Stoffe sind bekannt und im Chemikalienhandel erhältlich.

Es versteht sich, dass bei allen Additiven C) bis F) auch Mischungen verschiedener Additive C'), C") ... bis F'), F") ..., die unter die Definition des jeweiligen Additivs fallen, verwendet werden können.

### Komponente G)

Die erfindungsgemäßen thermoplastischen Formmassen können als Komponente G) zusätzlich weitere Additive enthalten. Beispiele hierfür sind Hilfs- und Füllstoffe. Derartige Stoffe sind beispielsweise Gleit- oder Entformungsmittel, Wachse, Pigmente, Farbstoffe, Flammschutzmittel, faser- und pulverförmige Füll- oder Verstärkungsmittel sowie andere Zusatzstoffe oder deren Mischungen.

Geeignete Gleit- und Entformungsmittel sind z.B. Stearinsäuren, Stearylalkohol, Stearinsäureester oder -amide sowie Silikonöle, Montanwachse und solche auf Basis von Polyethylen und Polypropylen.

Pigmente sind beispielsweise Titandioxid, Phthalocyanine, Ultramarinblau, Eisenoxide oder Ruß, sowie die gesamte Klasse der organischen Pigmente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammstoffmittel können z.B. die dem Fachmann bekannten Halogen-haltigen oder Phosphor-haltigen Verbindungen, Magnesiumhydroxid sowie andere gebräuchliche Verbindungen oder deren Mischungen verwendet werden. Ebenso ist roter Phosphor geeignet.

Als Beispiele für faserförmige bzw. pulverförmige Füllstoffe seien Kohlenstoff- oder Glasfasern in Form von Glasgeweben, Glasmatten oder Glasseiden-Rovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Betonite, Talkum, Feldspat oder insbesondere Calciumsilicate wie Wollastonit und Kaolin.

Die einzelnen Zusatzstoffe werden in den jeweils üblichen Mengen verwendet, so dass sich nähere Angaben hierzu erübrigen.

### Stabilisatoren

Die erfindungsgemäßen thermoplastischen Formmassen enthalten zusätzlich Stabilisatoren auf der Basis von Polyisocyanaten.

Es ist bekannt, Kunststoffe durch Zugabe von Stabilisatoren vor schädigenden Umwelteinflüssen zu schützen. Beispielsweise können Kunststoffe durch eine Mischung aus einem Antioxidans (AO) und einem Hindered Amine Light Stabilizer (HALS) oder durch eine Mischung aus einem UV-Absorber und einem phenolischen Antioxidans oder durch Mischung aus einem phenolischen Antioxidans, einem HALS und einem UV-Absorber gegen UV-Schädigung geschützt werden. Zum Schutz vor Schädigung durch thermische Belastung hat sich meist die Zugabe von Antioxidantien, wie sterisch gehinderten Phenolen, aromatischen Aminen und Phosphaten oder Thiosynergisten, bewährt.

Die in den erfindungsgemäßen thermoplastischen Formmassen verwendeten Stabilisatoren sind aufgebaut aus
(1) einem oder mehreren Polyisocyanaten mit dem Mittel 2,2 bis 8 Isocyanatgruppen pro Molekül,
(3) pro Mol Isocyanatgruppen 0 bis 0,9 Mol einer oder mehrerer Hilfsgruppen, welche die Eigenschaften des Stabilisators modifizieren, wobei die Hilfsgruppe über funktionelle Gruppen B, die mit den Isocyanatgruppen reagieren können, an die Polyisocyanate angekoppelt sind.

In einer **ersten** Variante umfassen die erfindungsgemäß verwendeten Stabilisatoren zusätzlich
(2a) 0,1 bis 1,0 Mol einer oder mehrerer Wirkstoffgruppen, pro Mol Isocyanatgruppen, auf Phenolbasis, welche Kunststoffe gegen Schädigung durch Wärme, UV-Strahlung, Oxidation, Hydrolyse oder mechanische Einwirkung bei der Verarbeitung schützen.

In einer **zweiten** Variante umfassen die erfindungsgemäß verwendeten Stabilisatoren zusätzlich
(2b) 0,1 bis 1,0 Mol einer oder mehrerer Wirkstoffgruppen, pro Mol Isocyanatgruppen, auf Basis von sterisch gehinderten Aminen, welche Kunststoffe gegen Schädigung durch Wärme, UV-Strahlung, Oxidation, Hydrolyse oder mechanische Einwirkung bei der Verarbeitung schützen.

In einer **dritten** Variante umfassen die erfindungsgemäß verwendeten Stabilisatoren zusätzlich
(2c) 0,1 bis 1,0 Mol in Summe mindestens zweier unterschiedlicher Wirkstoffgruppen, pro Mol Isocyanatgruppen, wobei eine Wirkstoffgruppe auf Phenol basiert und die andere Wirkstoffgruppe auf sterisch gehindertem Amin basiert, wobei die Wirkstoffgruppen Kunststoffe gegen Schädigung durch Wärme, UV-Strahlung, Oxidation, Hydrolyse oder mechanische Einwirkung bei der Verarbeitung schützen.

Die erfindungsgemäßen Stabilisatoren können genau eine Wirkstoffgruppe oder mehrere verschiedene Wirkstoffgruppen, beispielsweise mehrere verschiedene sterisch gehinderte Phenole, mehrere verschiedene HALS-Verbindungen oder ein oder mehrere sterisch gehinderte Phenole und eine oder mehrere HALS-Verbindungen, gebunden enthalten.

Eigenschaften der Stabilisatoren, die durch die Hilfsgruppen modifiziert werden, sind beispielsweise die Emulgierbarkeit oder Löslichkeit in polaren oder unpolaren Lösungsmitteln und/oder die Einarbeitbarkeit in einen Kunststoff oder eine Kunststoffmischung.

### Polyisocyanate

Die Polyisocyanate (1) enthalten im Mittel 2 bis 10, vorzugsweise 2,1 bis 10, besonders bevorzugt 2,2 bis 8, Isocyanatgruppen pro Molekül.

Als Di- und Polyisocyanate kommen die aus dem Stand der Technik bekannten aliphatischen, cycloaliphatischen und aromatischen Isocyanate in Frage. Bevorzugte Di- oder Polyisocyanate sind 4,4'-Diphenylmethandiisocyanat, 2,4'-Diphenylmethandiisocyanat, die Mischungen aus monomeren Diphenylmethandiisocyanaten und oligmeren Diphenylmethandiisocyanaten (Polymer-MDI), 2,4-Toluylendiisocyanat, 2,6-Toluylendüsocyanat, 1,5- und 2,6-Naphthylendiisocyanat, 1,3- und 1,4-Phenylendiisocyanat, Diphenyldiisocyanat, Toluidindiisocyanat, Triisocyanatotoluol, Tetramethylendiisocyanat, Hexamethylendiisocyanat, Isophorondiisocyanat, 2,4'- oder 4,4'-Methylenbis(cyclohexyl)diisocyanat, o-, m- oder p-Xylylendiisocyanat, Tetramethylxylylendiisocyanat, Dodecyldiisocyanat, Lysinalkylesterdiisocyanat, wobei Alkyl für C1-Alkyl bis C10-Alkyl steht, 2,2,4- oder 2,4,4-Trimethyl-1,6-hexamethylendiisocyanat, 1,4-Diisocyanatocyclohexan, 4-Isocyanatomethyl-1,8-octamethylendiisocyanat, 2-Butyl-2-ethylpentamethylendiisocyanat, 2-Isocyanatopropylcyclohexylisocyanat, 3(4)-Isocyanatomethyl-1-methylcyclohexyl-isocyanat, 1,3- oder 1,4-Bis(isocyanatomethyl)cyclohexan, 1,4-Diisocyanato-4-methylpentan und 4-Methylcyclohexan-1,3-diisocyanat (H-TDI).

Vorzugsweise werden Gemische aus zwei oder mehr der vorstehend genannten Polyisocyanate eingesetzt.

Geeignete Polyisocyanate sind weiterhin Verbindungen, die sich aus den oben genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Diese Verknüpfungsmechanismen sind z.B. beschrieben in Becker und Braun, Kunststoff-Handbuch Nr. 7, Polyurethane, Carl-Hanser-Verlag München 1993. Bevorzugt werden Polyisocyanate verwendet, die Urethan-, Allophanat-, Harnstoff-, Biuret-, Isocyanurat-, Uretonimin-, Oxadiazintrion- oder Iminoxadiazindion-Strukturen enthalten.

Es können auch Gemische der vorgenannten Polyisocyanate eingesetzt werden.

Die Verknüpfung der Di- oder Polyisocyanate über Urethangruppen erfolgt bevorzugt unter Verwendung von Alkoholen oder Alkoholmischungen mit einer Funktionalität von 2 oder mehr. Beispielhaft sei die Umsetzung von 3 Mol Hexamethylendiisocyanat, Isophorondiisocyanat, Toluylendiisocyanat oder Diphenylmethylendiisocyanat mit ≤ 1 Mol Triol, zum Beispiel Glycerin oder Trimethylolpropan, oder aber die Umsetzung von zwei Mol eines oligmeren Diphenylmethandiisocyanats (Polymer-MDI) mit ≤ 1 Mol Diol, zum Beispiel Ethylenglykol, Butandiol, Hexandiol oder einem Polyoxyalkylendiol, genannt. Bei diesen Reaktionen werden verzweigte Polyisocyanate mit einer Funktionalität größer 2 gebildet. Siehe dazu auch Becker und Braun, Kunststoff-Handbuch Nr. 7, Polyurethane, Carl-Hanser-Verlag München 1993, Seite 91.

Allophanatgruppen enthaltende Polyisocyanate werden aus Urethangruppen enthaltenden Polyisocyanaten erzeugt, indem die Urethangruppen mit weiteren Isocyanatgruppen umgesetzt werden. Siehe dazu auch Becker und Braun, Kunststoff-Handbuch Nr. 7, Polyurethane, Carl-Hanser-Verlag München 1993, Seite 94. Ein weiterer Weg der Herstellung ist die Reaktion von Oxadiazintrionen mit Alkoholen gemäß der EP 825211. Beispielhaft für die Herstellung eines Allophanats sei die Umsetzung von Hexamethylendiisocyanat oder Isophorondiisocyanat mit Monoalkoholen genannt, die gemäß GB 994 890, EP 496 208, EP 524 500 oder EP 524 501 zu Oligoisocyanaten mit einer Funktionalität größer 2 führen. Ebenso genannt sei die Umsetzung von Hexamethylendiisocyanat oder Isophorondiisocyanat mit Di- oder höherwertigen Alkoholen, wie beschrieben z. B. in der EP 1122273. Bei diesen Reaktionen werden verzweigte Polyisocyanate mit einer Funktionalität größer 2 gebildet.

Harnstoff- und Biuretgruppen enthaltende Polyisocyanate können zum Beispiel durch Reaktionen von Isocyanaten mit Wasser oder mit Aminen hergestellt werden. Siehe dazu auch Becker und Braun, Kunststoff-Handbuch Nr. 7, Polyurethane, Carl-Hanser-Verlag München 1993, Seite 95. Beispielhaft sei die Reaktion von Hexamethylendiisocyanat oder Isophorondiisocyanat mit Wasser oder Wasser generierenden Substanzen genannt, wie sie nach DE-A 28 08 801, DE-A 34 03 277 oder DE-A 15 43 178 beschrieben werden. Bei diesen Reaktionen werden verzweigte Polyisocyanate mit einer Funktionalität größer 2 gebildet.

Isocyanuratstrukturen enthaltende Polyisocyanate werden erhalten, indem drei Isocyanatgruppen katalytisch oder thermisch cyclisiert werden. Bei Einsatz von Di- oder Polyisocyanaten als Ausgangsverbindungen entstehen in der Regel neben den eigentlichen Trimeren auch höheroligomere Polyisocyanate. Die summarische Funktionalität dieser Polyisocyanate ist damit größer als 3. Siehe dazu auch Becker und Braun, Kunststoff-Handbuch Nr. 7, Polyurethane, Carl-Hanser-Verlag München 1993, Seite 91. Beispielhaft sei die Herstellung von verzweigten Polyisocyanaten durch Isocyanuratisierung von Hexamethylendiisocyanat oder Isophorondiisocyanat genannt, wie sie gemäß DE-A 29 16 201 oder DE-A 38 10 908 durchgeführt werden kann.

Uretonimingruppen enthaltende Polyisocyanate werden erhalten, indem Carbodiimidgruppen enthaltende Polyisocyanate weiter mit Isocyanatgruppen umgesetzt werden. Siehe dazu auch Becker und Braun, Kunststoff-Handbuch Nr. 7, Polyurethane, Carl-Hanser-Verlag München 1993, Seite 94.

Oxadiazintriongruppen enthaltende Polyisocyanate werden erhalten durch Umsetzung von Di- oder Polyisocyanaten mit Kohlendioxid, wie zum Beispiel beschrieben in der DE-A 16 70 666.

Iminooxadiazindiongruppen enthaltende Polyisocyanate sind als asymmetrische Verwandte der Isocyanuratgruppen enthaltenden Polyisocyanate anzusehen. Die Herstellung dieser Verbindungen wird zum Beispiel in der DE-A 197 34 048 beschrieben.

In einer bevorzugten Ausführungsform der Erfindung werden aliphatische oder cycloaliphatische verzweigte Di- oder Polyisocyanate verwendet.

### Wirkstoffgruppen

Die erfindungsgemäßen Stabilisatoren enthalten eine oder mehrere Wirkstoffgruppen (2 = 2a, 2b, 2c), wobei diese Wirkstoffgruppen über funktionelle Gruppen A, die mit den NCO-Gruppen der Polyisocyanate aktiv sind, an die Polyisocyanate angekoppelt sind.

Wirkstoffgruppen (2) im Sinne der vorliegenden Erfindung sind Gruppen, die einen Kunststoff oder Kunststoffmischung gegen schädliche Umwelteinflüsse schützen. Beispiele sind primäre und sekundäre Antioxidantien, Hindered Amine Light Stabilizer, UV-Absorber, Hydrolyse-Schutzmittel, Quencher und Flammschutzmittel.

Prinzipiell kann ein erfindungsgemäßer Stabilisator eine oder mehrere, auch unterschiedliche Wirkstoffgruppen enthalten. Anzahl der Wirkstoffgruppen und Verhältnis der Wirkstoffgruppen zueinander sind dabei variabel und nur durch die Anzahl NCO-Gruppen der Polyisocyanate (1) begrenzt. Hierbei muss jedoch nicht jede NCO-Gruppe der Polyisocyanate (1) mit einer Wirkstoffgruppe umgesetzt sein.

Soll ein erfindungsgemäßer Stabilisator z.B. als Antioxidans wirken, so können an die NCO-Gruppen der Polyisocyanate (1) solche Wirkstoffgruppen (2) angekoppelt werden, die den oxidativen Abbau eines Kunststoffs verlangsamen oder stoppen.

Ein Klasse von Wirkstoffgruppen (2), die als Antioxidantien wirken, sind sterisch gehinderte Phenole.

In einer Ausführungsform der Erfindung enthalten die erfindungsgemäßen Stabilisatoren als Wirkstoffgruppe (2a) somit ein sterisch gehindertes Phenol der allgemeinen Formel (III) 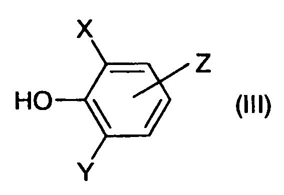 in gebundener Form.

Darin sind X und Y unabhängig voneinander jeweils ein Wasserstoffatom oder ein geradkettiger, verzweigter oder cyclischer Alkylrest mit 1 bis 12 Kohlenstoffatomen, und Z ist ein Rest der Formel

-C-R¹-A

worin R¹ eine Einfachbindung, ein linearer oder verzweigter divalenter organischer Rest mit 1 bis 100 Kohlenstoffatomen, bevorzugt 1 bis 12 Kohlenstoffatomen, besonders bevorzugt 1 bis 6 Kohlenstoffatomen ist, oder R¹ ein divalenter Rest der Formel

-(R²-C¹-R³)ₘ-

ist, wobei R² und R³ gleich oder verschieden voneinander sein können und unabhängig voneinander jeweils eine Einfachbindung, ein linearer oder verzweigter divalenter organischer Rest mit 1 bis 50 Kohlenstoffatomen, bevorzugt 1 bis 10 Kohlenstoffatomen, insbesondere 1 bis 4 Kohlenstoffatomen sind, und m eine Zahl von 1 bis 100, bevorzugt von 1 bis 10 und besonders bevorzugt von 1 bis 4 ist.

C und C¹ sind unabhängig voneinander jeweils eine Einfachbindung, ein Sauerstoffatom, ein Schwefelatom, eine -NH- oder eine -NR-Gruppe, eine Estergruppe (-C(O)O- oder -O(O)C-), eine Amidgruppe (-NHC(O)- oder -C(O)NH-), eine Urethangruppe (-OC(O)NH- oder-HNC(O)O-) oder eine Harnstoffgruppe (-HNC(O)N- oder -NC(O)NH-).

"Unabhängig voneinander" bedeutet, dass in jeder der m Wiederholungseinheiten C¹, R² bzw. R³ für einen anderen Rest stehen können.

A ist eine funktionelle Gruppe, mit der die Wirkstoffgruppe an die Ankergruppe gebunden wird. Beispiele für A sind primäre oder sekundäre Aminogruppen, Hydroxyl-, Thiol, Carboxyl- oder Epoxygruppen. Bevorzugte funktionelle Gruppen A sind Hydroxylgruppen, Thiolgruppen und primäre oder sekundäre Aminogruppen.

Bevorzugt enthalten die Stabilisatoren als phenolische Wirkstoffgruppe (2a) ein sterisch gehindertes Phenol der Formel (IV) in gebundener Form, 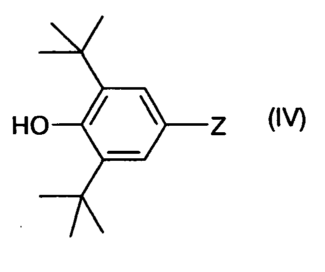 worin Z wie vorstehend definiert ist.

Bevorzugte Gruppen Z sind zum Beispiel 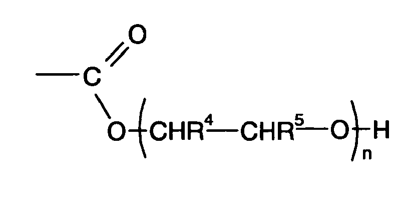 oder 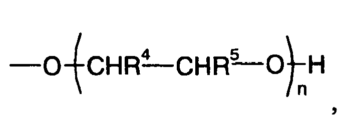 wobei R⁴ und R⁵ unabhängig voneinander Wasserstoff, lineare oder verzweigte Alkylketten mit 1 bis 10 Kohlenstoffatomen, bevorzugt 1 bis 4 Kohlenstoffatomen sein können. Solche Gruppen Z werden erhalten durch Veresterung eines Carbonsäuregruppen enthaltenden sterisch gehinderten Phenols mit einem Oligo- oder Polyalkylenoxid-Diol oder durch Alkoxylierung eines OH-Gruppen aufweisenden sterisch gehinderten Phenols mittels Ethylenoxid, Propylenoxid, Butylenoxid oder deren Mischungen.

Eine weitere Gruppe von Wirkstoffen (2b), die Polymere gegen die Einwirkung von UV-Licht stabilisiert, sind die so genannten Hindered Amine (Light) Stabilizer (HAS oder HALS, sterisch gehinderte Amine). Die Aktivität der HALS-Verbindungen beruht auf ihrer Fähigkeit, Nitroxylradikale zu bilden, die in den Mechanismus der Oxidation von Polymeren eingreifen. HALS gelten als hocheffiziente UV-Stabilisatoren für die meisten Polymere.

In einer weiteren Ausführungsform enthalten die erfindungsgemäßen Stabilisatoren als Wirkstoffgruppe (2b) somit ein sterisch gehindertes Amin in gebundener Form, das in der Lage ist, Nitroxylradikale zu bilden.

In einer bevorzugten Ausführungsform der Erfindung enthalten die erfindungsgemäßen Stabilisatoren als Wirkstoffgruppen (2b) HALS-Wirkstoffe der allgemeinen Formel (V) in gebundener Form, 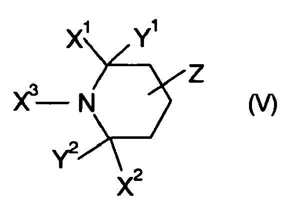 worin X¹, X², Y¹, Y² und X³ unabhängig voneinander ein Wasserstoffatom, ein geradkettiger oder verzweigter Alkylrest oder ein Cycloalkylrest mit 1 bis 12 Kohlenstoffatomen und X³ darüber hinaus ein Acylrest mit 2 bis 18 Kohlenstoffatomen, ein Alkoxyrest mit 1 bis 19 Kohlenstoffatomen und ein Aryloxycarbonylrest mit 7 bis 12 Kohlenstoffatomen sein kann, und Z wie vorstehend definiert ist.

Eine weitere Wirkstoffgruppe (2b) sind aromatische Amine. Aromatische Amine sind hierbei alle Verbindungen, die eine substituierte oder nicht substituierte Aminogruppe aufweisen, die direkt an ein aromatisches System gebunden ist. Aromatische Amine dienen je nach Substitution als Antioxidantien oder auch als Wirkstoff gegen den schädlichen Einfluss von Ozon.

In einer weiteren Ausführungsform der Erfindung enthalten die erfindungsgemäßen Stabilisatoren als Wirkstoffgruppe (2b) aromatische Amine der allgemeinen Formel (VI) in gebundener Form. 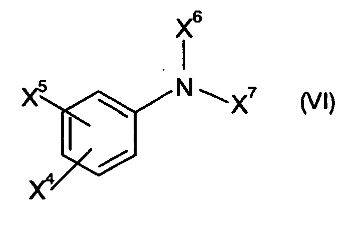 worin X⁴, X⁵, X⁶ und X⁷ unabhängig voneinander ein Wasserstoffatom, ein geradkettiger oder verzweigter Alkylrest oder ein Cycloalkylrest mit 1 bis 12 Kohlenstoffatomen oder Z sind, wobei Z wie obenstehend definiert ist, und
X⁷ darüber hinaus 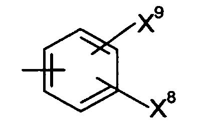 sein kann.

X⁸ und X⁹ sind unabhängig voneinander ein Wasserstoffatom, ein geradkettiger oder verzweigter Alkylrest oder ein Cycloalkylrest mit 1 bis 12 Kohlenstoffatomen oder Z, wobei Z wie obenstehend definiert ist.

In einer weiteren Ausführungsform enthalten die Stabilisatoren zwei unterschiedlichen Wirkstoffgruppen (2c), wobei eine Wirkstoffgruppe auf Phenol (2a; siehe oben) und die andere auf sterisch gehindertem Amin (2b; siehe oben) basiert.

Zusätzlich können die Stabilisatoren weitere Wirkstoffgruppen enthalten:
- Eine weitere geeignete Klasse von Wirkstoffen sind Phosphorverbindungen, die z. B. als sekundäres Antioxidans Verwendung finden. In einer weiteren Ausführungsform der Erfindung enthalten die erfindungsgemäßen Stabilisatoren als Wirkstoffgruppen Gruppen, die trivalenten Phosphor gebunden enthalten, beispielsweise Gruppen, die sich von Organophosphorverbindungen des trivalenten Phosphors wie Phosphiten und Phosphoniten ableiten. In einer bevorzugten Ausführungsform der Erfindung enthalten die erfindungsgemäßen Stabilisatoren einen Phosphorwirkstoff der allgemeinen Formel (VII) 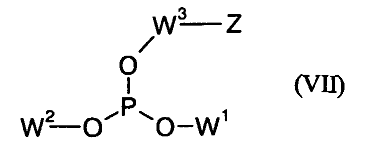
in gebundener Form, wobei W¹, W² und W³, unabhängig voneinander, ein geradkettiger, verzweigter oder cyclischer Alkylrest mit 1 bis 30 Kohlenstoffatomen oder ein substituierter oder ein unsubstituierter Arylrest mit 3 bis 30 Kohlenstoffatomen sind. W² und W³ können unabhängig voneinander ebenfalls Wasserstoff sein, die Bedeutung von Z ist wie vorstehend definiert.

Ein Beispiel für einen Phosphorwirkstoff ist die nachstehende Verbindung der Formel (VIII)

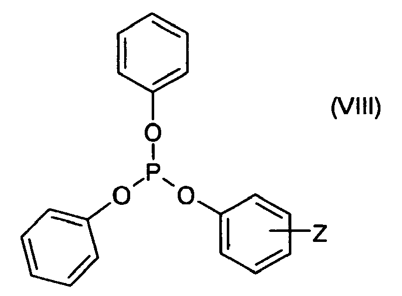

Eine weitere Klasse von Wirkstoffen, die Polymere gegen oxidativen Abbau schützen, sind Thioverbindungen. Thioverbindungen enthalten mindestens ein Schwefelatom. Sind mehrere Schwefelatome in der Thioverbindung enthalten, so können diese direkt miteinander verbunden sein oder durch einen organischen Rest voneinander getrennt sein. Bevorzugt sind Thioverbindungen, in denen die Schwefelatome nicht direkt miteinander verbunden sind. Thioverbindungen, die erfindungsgemäß zum Aufbau der Stabilisatoren eingesetzt werden können, enthalten eine funktionelle Gruppe D, die mit den funktionellen Gruppen B der Ankergruppe reagieren kann. Geeignete funktionelle Gruppen sind substituierte und nicht substituierte Amino-, Hydroxyl-, Thiol-, Carboxyl-, Isocyanato- und Epoxygruppen und aktivierte Doppelbindungen. Bevorzugt sind Hydroxylgruppen und substituierte und nicht substituierte Aminogruppen.

In einer weiteren Ausführungsform der Erfindung enthalten die Stabilisatoren als Wirkstoffgruppe somit zusätzlich Thiowirkstoffe der allgemeinen Formel (IX)

R⁶-S-R⁷-Z (IX)

in gebundener Form. Darin ist R⁶ ein linearer oder verzweigter aliphatischer organischer Rest enthaltend 1 bis 100 Kohlenstoffatome, bevorzugt 1 bis 12 Kohlenstoffatome, insbesondere 1 bis 6 Kohlenstoffatome, R⁷ ist eine Einfachbindung oder ein divalenter linearer oder verzweigter aliphatischer oder aromatischer Rest mit 1 bis 100 Kohlenstoffatomen, bevorzugt 1 bis 12 Kohlenstoffatomen, insbesondere 1 bis 6 Kohlenstoffatomen, und Z ist wie vorstehend definiert.

Zum Schutz gegen UV-Abbau können UV-Absorber als Wirkstoffgruppe an die hyperverzweigte Ankergruppe gebunden werden. Geeignete UV-Absorber sind solche Verbindungen, die in der UV-A- und UV-B-Region des Spektrums absorbieren.

In einer weiteren Ausführungsform der Erfindung sind die Wirkstoffgruppen, die als UV-Absorber wirken, Diphenylcyanacrylate, Benzotriazole, Benzophenone, Zimtsäureester, Benzylidenmalonate und Diarylbutadiene. Die genannten UV-Absorber enthalten funktionelle Gruppen D, die mit den funktionellen Gruppen B der Ankergruppe reagieren. Solche funktionellen Gruppen sind substituierte und nicht substituierte Amino-, Hydroxyl-, Thiol-, Carboxyl-, Isocyanato- und Epoxygruppen und aktivierte Doppelbindungen. Bevorzugt sind Hydroxyl- und substituierte und nicht substituierte Aminogruppen.

Beispiele sind Stabilisatoren, die eine Wirkstoffgruppe der Formeln (X) bis (XIII) 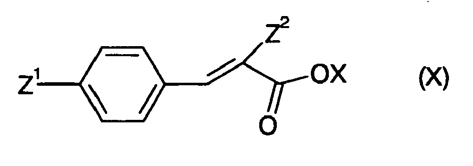 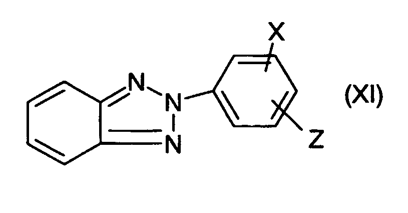 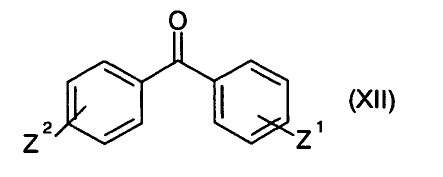 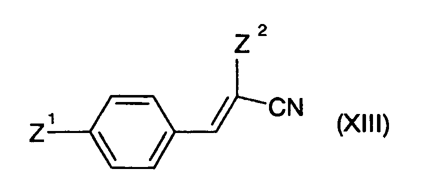 in gebundener Form enthalten.

Darin binden Z¹ und/oder Z² an die funktionellen Gruppen B der Ankergruppe und sind unabhängig voneinander Z oder C-X, wobei X ein Wasserstoffatom, ein geradkettiger verzweigter Alkylrest oder ein Cycloalkylrest mit 1 bis 12 Kohlenstoffatomen ist und C und Z wie vorstehend definiert sind.

Eine weitere Wirkstoffgruppe sind Benzofurane oder Indolene. Solche Verbindungen sind z. B. beschrieben in US 4,325,863. Prinzipiell sind Benzofurane oder Indolene als Wirkstoffgruppen geeignet, die funktionelle Gruppe tragen, die mit den funktionellen Gruppen B der Ankergruppe reagieren können. Beispiele für solche funktionelle Gruppen sind substituierte Amino-, Hydroxyl-, Thiol-, Carboxyl-, Isocyanato- oder Epoxygruppen oder aktivierte Doppelbindungen. Bevorzugt sind Hydroxylgruppen und substituierte und nicht substituierte Aminogruppen. In einer weiteren Ausführungsform der Erfindung erhalten die erfindungsgemäßen Stabilisatoren als Wirkstoffgruppe daher zusätzlich zu den Stabilisatoren (2a), (2b) und/oder (2c) Verbindungen der allgemeinen Formel (XIV) in gebundener Form: 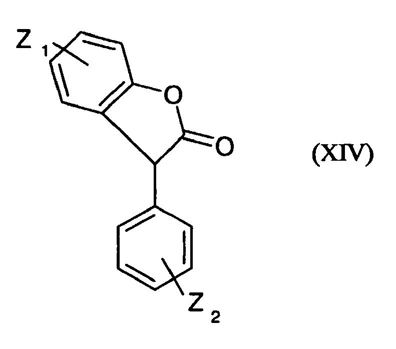 Darin binden Z¹ und/oder Z² an die funktionellen Gruppen B der Ankergruppe. Z¹ und Z² sind unabhängig voneinander Z oder C-X, wobei X ein Wasserstoffatom, ein geradkettiger oder verzweigter Alkylrest oder ein Cycloalkyrest mit 1 bis 12 Kohlenstoffatomen ist, und C und Z sind wie vorstehend definiert.

### Hilfsgruppen

Die erfindungsgemäßen Stabilisatoren können eine oder mehrere Hilfsgruppen (3) aufweisen.
(3) stellt im Sinne der Erfindung eine Hilfsgruppe dar, die die Verarbeitung, Einarbeitung, Emulgierbarkeit oder Löslichkeit des Stabilisators im Sinne des Nutzers beeinflusst. Soll beispielsweise der Stabilisator in einer wässrigen Lösung dispergiert werden, so kann es hilfreich sein, eine Hilfsgruppe einzubauen, die die Emulgierbarkeit des Stabilisators erhöht. Umgekehrt kann es bei Einsatz in kohlenwasserstoffhaltigen Lösungsmitteln von Vorteil sein, die Hydrophobie des Produktes zu erhöhen, indem bevorzugt hydrophobe Reste als Hilfsgruppe eingebaut werden. Gleichsam kann es für die Verarbeitung des Stabilisators wichtig sein, die Glastemperatur und Viskosität abzusenken. Hier kann dann ebenfalls eine Hilfsgruppe zum Einsatz kommen, die die Anlagerung der Stabilisatormoleküle zu Aggregaten verhindert und so viskositätsmindemd wirkt. Schließlich kann durch die Wahl der Hilfsgruppe auch die Löslichkeit des Stabilisators im Sinne des Anwenders beeinflusst werden. Dadurch kann z.B. der Übertritt aus dem Kunststoff in Lebensmittel hinein reduziert werden bzw. die Verteilung des Stabilisators bei verschiedenen Polymerblends zu Gunsten einer der beiden Blendkomponenten gelenkt werden. Aufgrund der vielfältigen Aufgaben, die der Hilfsgruppe (3) zukommen können, ist die Art der Struktur der Hilfsgruppe (3) sehr vielfältig.

Die Hilfsgruppe (3) wird wie die Wirkstoffgruppe (2) über funktionelle Gruppen B, die mit den NCO-Gruppen des Polyisocyanats (1) reagieren, an das Polyisocyanat (1) gebunden. Beispiele für Gruppen B sind primäre oder sekundäre Aminogruppen, Hydroxyl-, Thiol-, Carboxyl- und Epoxygruppen. Bevorzugt sind Hydroxyl- und Thiolgruppen sowie primäre oder sekundäre Aminogruppen.

Beispielsweise können hydrophobierend wirkende Hilfsgruppen folgenden schematischen Aufbau haben:

B-S

S ist in diesem Zusammenhang ein unpolarer Rest, z.B. ein geradkettiger, verzweigter oder cyclischer Alkylrest mit 1 bis 10000 Kohlenstoffatomen, bevorzugt 2 bis 500 Kohlenstoffatomen, insbesondere 4 bis 50 Kohlenstoffatome.

Beispiele für S sind geradkettige oder verzweigte aliphatische Strukturen oder aromatische Strukturen, wie Methyl-, Ethyl-, Propyl-, Butyl-, Pentyl-, Hexyl-, Heptyl-, Octyl-, Nonyl-, Decyl-, Dodecyl, Stearyl-, Oleyl-, Palmityl-, Oligobutyl-, Oligobutadienyl-, Oligoisobutyl-, Polybutyl-, Polybutadienyl-, Polyisobutyl-, Phenyl-, Naphthyl- oder Nonylphenylreste. Beispiele für eine hydrophobierend wirkende Hilfsstoffe (B-S) sind Stearinsäure, Ölsäure, Palmitinsäure, Stearinsäurechorid, Octylamin, Stearylamin, Polyisobutylenamin, Dipentylamin, Diisopentylamin, Dihexylamin, Octylalkohol, Stearylalkohol, Hexadecanol, Octadecanol, Octadecenol, Polyisobutylenalkohol, Nonylphenol, Naphthol, Benzylalkohol oder Phenylethanol. Soll die Hilfsgruppe hydrophilierend wirken, so kann (3) folgenden schematischen Aufbau haben:

B-T

T ist in diesem Zusammenhang ein hydophilierend wirkender Rest, z.B. ein Diethylenglykolmonomethylether-, Triethylenglykolmonomethylether-, Oligoethylenglykolmonmethylether-, Polyethylenglykolmonomethylether-, Oligopropylenglykolmonomethylether-, Polypropylenglykolmonomethylether- oder ein Poly(ethylen)(propylen)-glykolmonomethylether-Rest. Weiterhin wirken hydrophilierend: Reste von Aminocarbonsäuren, Hydroxycarbonsäuren, Mercaptocarbonsäuren, Aminosulfonsäuren, Hydroxysulfonsäuren, Mercaptosulfonsäuren, Hydroxyamin-, Hydroxyammonium- oder Hydroxyphosphoniumverbindungen.

Beispiele für hydophilierend wirkende Hilfsstoffe sind Diethylenglykolmonomethylether, Triethylenglykolmonomethylether, Oligoethylenglykolmonomethylether, Polyethylenglykol-monomethylether, Oligopropylenglykolmonomethylether, Polypropylenglykol-monomethylether Poly(ethylen)(propylen)glykolmonomethylether, 2-Methoxyethylamin, Di(2-methoxyethyl)amin, 3-(2-Methoxyethoxy)propylemin, 9-Amino-3,6-dioxanonan-1-ol oder höhermolekulare Polyalkylenoxid-Amine, allgemein bekannt unter dem Namen Jeffamine^{®} der Firma Huntsman, Milchsäure, Mercaptoessigsäure, Hydroxypivalinsäure, Glycin, β-Alanin, Taurin, Diethanolamin, Dipropanolamin, Dibutanolamin, N,N-Dimethylethanolamin oder N,N-Diethylethanolamin.

Weiter Gegenstand der vorliegenden Erfindung sind Stabilisatoren (im Folgenden auch als gemischte Stabilisatoren bezeichnet), die aufgebaut sind aus
(I) einem oder mehreren Polyisocyanat(en) mit im Mittel 2 bis 10, vorzugsweise 2,1 bis 10, besonders bevorzugt 2,2 bis 8, Isocyanatgruppen pro Molekül,
(II) pro Mol Isocyanatgruppen 0,1 bis 1,0 Mol in Summe mindestens zweier unterschiedlicher Wirkstoffgruppen, wobei eine Wirkstoffgruppe auf Phenol basiert und die andere Wirkstoffgruppe auf sterisch gehinderten Aminen basiert, wobei die beiden Wirkstoffgruppen Kunststoffe gegen Schädigung durch Wärme UV-Strahlung, Oxidation, Hydrolyse oder mechanische Einwirkung bei der Verarbeitung schützen,
(III) pro Mol Isocyanatgruppen 0 bis 0,9 mol einer oder mehrerer Hilfsgruppen, welche die Eigenschaften des Stabilisators modifizieren, wobei die Hilfsgruppen über funktionelle Gruppen, die mit den Isocyanatgruppen reagieren können, an die Polyisocyanate angekoppelt sind.

Bezüglich der einzelnen Wirkstoffgruppen gilt das zuvor für die Stabilisatoren mit nicht-gemischten Wirkstoffgruppen.

Weiterer Gegenstand der vorliegenden Erfindung ist die Verwendung dieser gemischten Stabilisatoren zur Stabilisierung von Polyolefinen, Polyamiden, Polyurethanen, Polyacrylaten, Polycarbonaten, Polyestern, Polyoxymethylenen, Polystyrolen und Styrolcopolymeren sowie die Verwendung dieser gemischten Stabilisatoren zur Stabilisierung von Dispersionen, Lacken, Beschichtungen, Farbstoffen, Klebstoffen, Lebensmitteln, Pharmaka und Kosmetika.

Die erfindungsgemäßen Wirkstoffgruppen können beispielsweise in den Verhältnissen
Stoffmenge (2a) = 0,05 bis 0,95 mol mit Stoffmenge (2b) + Stoffmenge (weiterer Stabilisatoren) = 0,95 bis 0,05 mol
   oder
Stoffmenge (2b) = 0.05 bis 0,95 mol mit Stoffmenge (2a) + Stoffmenge (weiterer Stabilisatoren) = 0,95 bis 0,05 mol

Vorliegen bzw. verwendet werden.

### Synthese der erfindungsgemäßen Stabilisatoren

Die Herstellung der erfindungsgemäßen Stabilisatoren erfolgt üblicherweise über eine Polyadditionsreaktion dergestalt, dass wenigstens ein Polyisocyanat (1) als Ankergruppe, gegebenenfalls unter Mitverwendung eines organischen Lösungsmittels, unter Inertgasatmosphäre, vorzugsweise unter Stickstoff, in einem Reaktionsgefäß vorgelegt und unter Rühren auf Reaktionstemperatur gebracht wird. Anschließend gibt man bei Reaktionstemperatur wenigstens einen Wirkstoff (2) kontinuierlich oder diskontinuierlich zu. Die Menge an Wirkstoff (2) ist abhängig von der Anzahl der NCO-Gruppen des Polyisocyanats (1) und wird vorzugsweise so gewählt, dass das Verhältnis der Molzahl Isocyanatgruppen zur Molzahl der mit diesen reaktiven Gruppen A des Wirkstoffes im wesentlichen 1:1 beträgt. Werden mehrere Wirkstoffe gleichzeitig oder nacheinander mit dem Polyisocyanat (1) umgesetzt, oder wird nach Ankoppeln der Wirkstoffe (2) noch ein weiteres Hilfsmittel (3) zur Herstellung des erfindungsgemäßen Stabilisators zugegeben, so wird die Gesamtmenge der reaktiven Gruppen A der Wirkstoffe (2) und der reaktiven Gruppen B der Hilfsmittel (3) so bemessen, so dass sie im Wesentlichen der Gesamtmenge der Isocyanatgruppen entspricht.

Die erfindungsgemäßen Stabilisatoren können aber noch bis zu 20 Mol-%, vorzugsweise bis zu 10 Mol-% freie NCO-Gruppen aufweisen, d. h. NCO-Gruppen, die nicht mit einem Wirkstoff (2) oder einem Hilfsstoff (3) abreagiert haben.

Vorzugsweise weisen die erfindungsgemäßen Stabilisatoren jedoch im Wesentlichen keine freien NCO-Gruppen auf.

Die Reaktionszeit wird in der Regel so gewählt, dass die NCO-Gruppen der Polyisocyanate (1) vollständig mit den reaktiven Gruppen A der Wirkstoffe und gegebenenfalls den reaktiven Gruppen B der Hilfsstoffe umgesetzt werden.

Die vorgenannte Umsetzung mit den Wirkstoffgruppen und den Hilfsstoffen kann gegebenenfalls in Anwesenheit von Katalysatoren erfolgen, die in Mengen von 0,0001 bis 1 Gew.-%, insbesondere von 0,001 bis 0,1 Gew.-%, jeweils bezogen auf die Menge der Polyisocyanate (1), eingesetzt werden. Als Katalysatoren für Polyadditionsreaktionen kommen metallorganische Verbindungen, speziell Zinn-, Zink-, Titan-, Wismut- oder Zirkon-organische Verbindungen in Betracht. Besonders bevorzugt werden zum Beispiel Dibutylzinndilaurat, Dibutylzinnoxid, Titan-tetrabutylat, Zink-Acetylacetonat oder Zirkon-Acetylacetonat eingesetzt. Weiterhin können starke Basen, vorzugsweise stickstoffhaltige Verbindungen, wie Tributylamin, Chinnuclidin, Diazabicyclooctan, Diazabicyclononan, Diazabicyclononen, Diazabicycloundecan oder Diazabicycloundecen eingesetzt werden.

Als geeignete Lösungsmittel können solche verwendet werden, die unter Reaktionsbedingungen gegenüber den Einsatzstoffen inert sind. Geeignet sind zum Beispiel Aceton, 2-Butanon, Essigsäureethylester, Essigsäurebutylester, Tetrahydrofuran, Dioxan, Benzol, Toluol, Xylol, Ethylbenzol, Chlorbenzol, Dichlorbenzol, Dimethylformamid, Dimethylacetamid oder N-Methylpyrrolidon.

Die Reaktionstemperatur für die Polyadditionsreaktion beträgt üblicherweise -10 bis 220°C, bevorzugt 0 bis 180°C. Die Reaktion erfolgt sowohl bei Atmosphärendruck als auch bei einem Druck oberhalb oder auch unterhalb des Atmosphärendrucks, beispielsweise bei einem Druck von 2 bis 20 bar oder bei 0,1 bis 0,001 bar.

### Verfahren zur Herstellung der Formmassen

Die Herstellung der Formmassen erfolgt vorzugsweise durch separates Herstellen der einzelnen Komponenten A), B) bzw. B') und B"), D), E) und F) und gegebenenfalls C) und G) und der Stabilisatoren und anschließendes Vermischen der Komponenten.

Das Pfropfpolymerisat A) wird bevorzugt nach dem Verfahren der Emulsionspolymerisation hergestellt, wie es bereits beschrieben wurde. Dabei erhält man eine wässrige Dispersion.

Die erhaltene Dispersion des Pfropfpolymerisates A) kann entweder direkt mit den Komponenten B) bzw. B') und B"), D), E) und F) sowie gegebenenfalls C) und G) und dem Stabilisator vermischt werden, oder sie kann zuvor aufgearbeitet werden. Letzteres Vorgehen ist eine der bevorzugten Ausführungsformen.

Die Aufarbeitung der Dispersion des Pfropfpolymerisates A) bzw. A') erfolgt in an sich bekannter Weise. Üblicherweise wird zunächst das Pfropfpolymerisat A) bzw. A') aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation). Auch eine Ausfällung durch hohe Scherkräfte, die sog. Scherfällung, ist möglich, wobei die hohen Scherkräfte beispielsweise durch Rotor/Stator-Systeme oder Hindurchpressen der Dispersion durch einen engen Spalt erzeugt werden. Die wässrige Phase kann in üblicher Weise, etwa durch Sieben, Filtrieren, Dekantieren oder Zentrifugieren, abgetrennt werden. Man erhält üblicherweise durch diese vorherige Abtrennung des Dispersionswassers wasserfeuchte Pfropfpolymerisate A) bzw. A') mit einem Restwassergehalt von bis zu 60 Gew.-%, bezogen auf A) bzw. A'), wobei das Restwasser z.B. sowohl am Pfropfpolymerisat äußerlich anhaften als auch darin eingeschlossen sein kann.

Das Pfropfpolymerisat kann danach erforderlichenfalls in bekannter Weise weiter getrocknet werden, z.B. durch Warmluft oder mittels eines Stromtrockners. Ebenso ist es möglich, die Dispersion durch Sprühtrocknung aufzuarbeiten.

In einer bevorzugten Ausführungsform werden die Pfropfpolymerisate A) bzw. A') und die weiteren Komponenten B) bis G) bzw. B'), B") bis G) und der oder die Stabilisator/en in einer Mischvorrichtung gemischt, wobei eine im Wesentlichen schmelzflüssige Polymermischung entsteht.

"Im Wesentlichen schmelzflüssig" bedeutet, dass die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, ungeschmolzene Pigmente, Farbstoffe etc. "Schmelzflüssig" bedeutet, dass die Polymermischung zumindest zähflüssig ist, sie also zumindest in dem Maß erweicht ist, dass sie plastische Eigenschaften hat.

Als Mischvorrichtungen werden solche verwendet, die dem Fachmann bekannt sind. Man kann die Komponenten A) bis G) bzw. A'), B'), B") bis G) und der oder die Stabilisator/en beispielsweise durch gemeinsames Extrudieren, Kneten oder Verwalzen vermischen, wobei die Komponenten und der oder die Stabilisator/en nötigenfalls zuvor aus der bei der Polymerisation erhaltenen Lösung oder aus der wässrigen Dispersion isoliert worden sind.

Im Falle des Einmischens einer oder mehrerer Komponenten in Form einer wässrigen Dispersion bzw. einer wässrigen oder nichtwässrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des erfindungsgemäßen Verfahrens sind beispielsweise diskontinuierlich arbeitende, beheizte Innenkneter mit oder ohne Stempel, kontinuierlich arbeitende Kneter wie z.B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, sodass die Mischvorrichtung nicht beheizt werden muss. Ansonsten wird die Mischvorrichtung in der Regel beheizt. Die Temperatur richtet sich nach den chemischen und physikalischen Eigenschaften der Komponenten und des oder der Stabilisator/en, und ist so zu wählen, dass eine im Wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, dass die Mischvorrichtung sogar gekühlt werden muss. Üblicherweise betreibt man die Mischvorrichtung bei 150 bis 300°C, bevorzugt 180 bis 300°C.

In einer bevorzugten Ausführungsform erfolgt das Vermischen des Pfropfpolymerisates A) bzw. A') mit dem Polymerisat B) bzw. B') und B") und den - soweit vorhandenen - weiteren Komponenten C) bis G) sowie dem oder den Stabilisator/en in einem Extruder, wobei die Dispersion des Pfropfpolymerisates ohne vorherige Abtrennung des Dispersionswassers direkt in den Extruder eindosiert wird. Das Wasser wird üblicherweise entlang des Extruders über geeignete Entgasungsvorrichtungen entfernt. Als Entgasungsvorrichtungen können beispielsweise Entgasungsöffnungen, die mit Rückhalteschnecken versehen sind (welche das Austreten der Polymermischung verhindern), eingesetzt werden.

In einer anderen, ebenfalls bevorzugten Ausführungsform erfolgt das Vermischen des Pfropfpolymerisates A) bzw. A') mit dem Polymerisat B) bzw. B') und B") und den - soweit vorhandenen - weiteren Komponenten C) bis G) und dem oder der Stabilisator/en in einem Extruder, wobei das Pfropfpolymerisat zuvor z.B. durch Sieben, Filtrieren, Dekantieren oder Zentrifugieren vom Dispersionswasser abgetrennt wird. Man erhält durch diese vorherige Abtrennung des Dispersionswassers wasserfeuchte Pfropfpolymerisate mit einem Restwassergehalt von bis zu 60 Gew.-%, bezogen auf A) bzw. A'), wobei das Restwasser z.B. sowohl am Pfropfpolymerisat äußerlich anhaften als auch darin eingeschlossen sein kann. Das vorhandene Restwasser kann dann, wie zuvor beschrieben, über Entgasungseinrichtungen des Extruders als Dampf entfernt werden.

In einer besonders bevorzugten Ausführungsform wird jedoch das Restwasser im Extruder nicht allein als Dampf entfernt, sondern es wird ein Teil des Restwassers mechanisch im Extruder entfernt und verlässt den Extruder in flüssiger Phase. Dazu wird im Extruder durch Stauelemente ein Druck aufgebaut, der das Wasser aus dem Polymerisat auspresst. Es fließt durch Entwässerungsöffnungen als flüssiges Wasser ab. Dem gleichen Extruder können das Polymerisat B) bzw. B') und die - sofern vorhandenen - weiteren Komponenten C) bis G) sowie der oder die Stabilisator/en zugeführt werden, sodass als Produkt des Verfahrens die fertige Formmasse extrudiert wird.

Näheres zu diesem Verfahren ist beispielsweise der WO-A 98/13412 zu entnehmen.

Es ist jedoch auch möglich, das Pfropfpolymerisat A) bzw. A') zunächst, wie gerade beschrieben, durch Auspressen im Extruder zu entwässern und das entwässerte Pfropfpolymerisat in einem zweiten Extruder oder einer anderen Mischvorrichtung mit den anderen Komponenten B) bis G) bzw. B'), B") bis G) und dem oder den Stabilisator/en zu vermischen.

Wird ein Extruder zum Auspressen oder als Mischvorrichtung verwendet, so können, wie allgemein bekannt ist, die verschiedenen Zonen eines Extruders individuell geheizt oder gekühlt werden, um entlang der Schneckenachse ein optimales Temperaturprofil einzustellen. Weiterhin ist dem Fachmann geläufig, dass üblicherweise die einzelnen Abschnitte des Extruders verschieden lang sein können.

Die im Einzelfall zu wählenden Temperaturen und Längen der einzelnen Abschnitte unterscheiden sich in Abhängigkeit der chemischen und physikalischen Eigenschaften der verwendeten Komponenten und des oder der Stablisator(en) und deren Mengenverhältnissen. Gleiches gilt auch für die Schneckendrehzahl, die innerhalb eines weiten Bereiches variieren kann. Nur beispielhaft sei eine Drehzahl der Extruderschnecken im Bereich von 100 bis 1200, bevorzugt 100 bis 350 min⁻¹ genannt.

Die in der Mischvorrichtung aus den verwendeten Komponenten und dem oder den Stabilisator/en hergestellte im Wesentlichen schmelzflüssige Polymermischung wird in einer bevorzugten Ausführungsform einem schnellen Abkühlen unterworfen.

Das schnelle Abkühlen erfolgt üblicherweise durch Inkontaktbringen der im Wesentlichen schmelzflüssigen Polymermischung (nachfolgend kurz als "Polymerschmelze" bezeichnet) mit einem kalten Medium oder mit einer kalten Oberfläche.

Dabei bedeutet "kalt" eine Temperatur, die so weit unter der Temperatur der Polymerschmelze liegt, dass die Polymerschmelze beim Inkontaktbringen schnell abkühlt. "Kalt" bedeutet demnach nicht in jedem Fall gekühlt. Beispielsweise kann eine 200°C heiße Polymerschmelze durch Wasser einem schnellen Abkühlen unterworfen werden, welches zuvor auf z.B. 30 bis 90°C erwärmt wurde. Entscheidend ist, dass die Differenz zwischen der Polymerschmelzetemperatur und der Temperatur des kalten Mediums bzw. der kalten Oberfläche zum schnellen Abkühlen der Schmelze ausreicht.

"Schnell" bedeutet, dass die Polymerschmelze in einem Zeitraum bis 10 sec, bevorzugt bis 5 sec, besonders bevorzugt bis 3 sec, vom schmelzflüssigen in den festen Zustand überführt und abgekühlt wird.

Bevorzugt wird die Polymerschmelze mit einem kalten Medium schnell abgekühlt. Solche Medien können Gase oder Flüssigkeiten sein.

Beispielhaft seien für gasförmige kalte Medien (nachfolgend als "Kühlgas" bezeichnet) gekühlte oder ungekühlte Luft oder, insbesondere bei oxidationsempfindlichen Polymerschmelzen, Gase wie Kohlendioxid, Stickstoff oder Edelgase genannt. Bevorzugt wird als Kühlgas Luft oder Stickstoff verwendet. Das Kühlgas wird in der Regel auf die aus der Mischvorrichtung austretende Polymerschmelze geblasen.

Als flüssige kalte Medien (nachfolgend als "Kühlflüssigkeit" bezeichnet) können organische und anorganische Kühlflüssigkeiten eingesetzt werden. Geeignete organische Kühlflüssigkeiten sind beispielsweise Öle und andere hochsiedende organische flüssige Stoffe, die mit der abzukühlenden Polymerschmelze weder chemische noch physikalische Wechselwirkungen (z.B. Quellen, Anlösen, etc.) eingehen, also gegenüber der Polymerschmelze chemisch und physikalisch inert sind.

Bevorzugt werden anorganische Kühlflüssigkeiten verwendet, insbesondere wässrige Lösungen und Wasser. Besonders bevorzugt ist Wasser, das gekühlt (Gefrierpunkt bis Raumtemperatur), ungekühlt oder temperiert (Raumtemperatur bis Siedepunkt) eingesetzt werden kann.

Die Kühlflüssigkeit wird in der Regel auf die austretende Polymerschmelze gesprüht oder die Polymerschmelze tritt aus der Mischvorrichtung direkt in ein Bad aus der Kühlflüssigkeit aus. Man kann die Kühlflüssigkeit auch als breiten Flüssigkeitsstrahl (Schwall) auf die austretende Polymerschmelze aufbringen.

Ein Besprühen der Polymerschmelze mit Kühlflüssigkeit ist insbesondere bei der Verwendung von Mischvorrichtungen vorteilhaft, die Folien erzeugen (etwa Walzenstühle, Mischwalzwerke und Kalander). Die als Film austretende Polymerschmelze verfestigt sich durch das Besprühen mit Kühlflüssigkeit zu einer Folie.

Besonders bevorzugt tritt die Polymerschmelze aus der Mischvorrichtung direkt in eine Bad aus der Kühlflüssigkeit aus, ganz besonders bevorzugt in ein Bad aus Wasser.

Es ist auch möglich und in manchen Fällen bevorzugt, die aus der Mischvorrichtung austretende Polymerschmelze zunächst durch Inkontaktbringen mit einem Kühlgas, z.B. Aufblasen von temperierter Luft oder einem Schutzgas wie Stickstoffgas, nur geringfügig abzukühlen. Dadurch verfestigt sich lediglich die äußere Oberfläche der Schmelze, wohingegen das Innere des Polymeren noch schmelzflüssig bleibt. Das eigentliche schnelle Abkühlen erfolgt dann durch Inkontaktbringen der zuvor an der Oberfläche verfestigten Schmelze mit einer Kühlflüssigkeit, z.B. Wasser, wobei auch das Innere der Schmelze aushärtet.

Beispielsweise können die aus dem Düsenkopf des Extruders austretenden Stränge der Polymerschmelze durch Aufblasen von Luft zunächst oberflächlich verfestigt werden und die Stränge dann in ein Wasserbad überführt werden, wo die eigentliche, schnelle Abkühlung erfolgt.

Die durch das schnelle Abkühlen erstarrte Polymerschmelze kann in dem Fachmann bekannter Weise weiter verarbeitet werden. In der Regel wird das fest gewordene Polymere durch Mahlen, Schneiden, Granulieren oder andere Verfahren zerkleinert.

In einer besonders bevorzugten Ausführungsform werden das schnelle Abkühlen und die Zerkleinerung nach dem Verfahren der Unterwassergranulierung vorgenommen. Bei der Unterwassergranulierung tritt die Polymerschmelze aus der Mischvorrichtung durch eine Düsenplatte aus, deren Bohrungen (Düsen) bevorzugt rund sind und die bevorzugt kreisförmig angeordnet sind. Die Düsenplatte befindet sich unter Wasser (oder einer anderen Kühlflüssigkeit) oder die Düsenplatte wird mit Wasser (oder einer anderen Kühlflüssigkeit) besprüht, was unter Schutzgas geschehen kann. Unmittelbar hinter der Düsenplatte an deren Außenseite befinden sich Schneidvorrichtungen, bevorzugt rotierende Messer, die das austretende Polymer abtrennen. Das Polymer wird demnach von rotierenden Messern abgetrennt und in Wasser (oder einer anderen Kühlflüssigkeit) schnell abgekühlt, wobei es zu in der Regel mehr oder weniger runden, perlförmigen Körnern erstarrt.

Bei der Düsenplatte sind jedoch auch andere als kreisförmige Anordnungen der Bohrungen und andere als runde Lochformen gebräuchlich.

In einer anderen Ausführungsform wird eine so genannte Unterwasser-Stranggranulierung eingesetzt. Dabei tritt die Schmelze als Strang aus einer Düsenplatte aus und wird sofort durch einen Wasser- oder Kühlmittelschwall benetzt und dadurch schnell abgekühlt, wonach die Stränge über eine schiefe Ebene in eine Wasserbad oder Kühlmittelbad eingeführt und nach dem Abkühlen granuliert werden.

In einer besonders bevorzugten Ausführungsform wird ein Extruder als Mischvorrichtung für die verwendeten Komponenten mit der soeben beschriebenen Unterwassergranulierung verwendet. Die Austragsöffnung des Extruders ist in dieser Ausführungsform folglich eine unter Wasser befindliche (oder mit Wasser besprühte) Düsenplatte mit Schneidvorrichtungen, insbesondere rotierenden Messern.

Ein bevorzugtes Herstellungsverfahren ist demnach gekennzeichnet durch
1) Herstellen des Pfropfcopolymerisates A) bzw. A') nach dem Verfahren der Emulsionspolymerisation,
2) Vermischen des Pfropfcopolymerisates A) bzw. A') mit dem harten Copolymerisat B) bzw., falls vorhanden, B') und B"), dem oder den Stabilisator(en) und gegebenenfalls den weiteren Komponenten C) bis G) in einer Mischvorrichtung, wobei eine im Wesentlichen schmelzflüssige Polymermischung entsteht,
3) schnelles Abkühlen der im Wesentlichen schmelzflüssigen Polymermischung innerhalb 10 sec.

Bevorzugt sind insbesondere thermoplastische Formmassen, enthaltend die zuvor beschriebenen Komponenten A), B) bzw. B') und B"), D), E), F), G) und ggf. C) und den oder die Stabilisator/en, und Butadien als konjugiertes Dien a11) erhältlich durch
1) Herstellen der Pfropfpolymerisate A) bzw. A') nach dem Verfahren der Emulsionspolymerisation, wobei ein wasserfeuchtes Polymerisat A) bzw. A') erhalten wird, das bis zu 60 Gew.-%, bezogen auf A) bzw. A'), Restwasser enthält,
2) Vermischen des wasserfeuchten Pfropfpolymerisates A) bzw. A') mit den weiteren Komponenten B) bis G) bzw. B'), B") bis G) und dem oder den Stabilisator/en in einem Extruder, wobei eine im Wesentlichen schmelzflüssige Polymermischung entsteht, und wobei mindestens 30 Gew.-% des Restwassers der wasserfeuchten Pfropfpolymerisates A) bzw. A') durch Druckaufbau im Extruder als flüssiges Wasser ausgepresst werden,
3) schnelles Abkühlen der im Wesentlichen schmelzflüssigen Polymermischung durch das Verfahren der Unterwassergranulierung innerhalb von 10 sec.

In einer anderen besonders bevorzugten Ausführungsform werden die Additive C) bis G) und den oder die Stabilisator/en zu verschiedenen Zeitpunkten des Herstellungsverfahrens zugefügt. Beispielsweise können eine oder mehrere der Komponenten C) bis G) und der oder die Stabilisator/Stabilisatoren bereits der wässrigen Dispersion/Emulsion des Pfropfcopolymerisates A) bzw. A') (vor, während oder nach der Polymerisationsreaktion von A) bzw. A')) zugefügt werden, und die restlichen Komponenten werden zu einem späteren Zeitpunkt, beispielsweise während der Vermischung im Extruder oder anderen Mischvorrichtungen zugefügt.

In einer anderen besonders bevorzugten Ausführungsform teilt man eines, mehrere oder alle der Additive C) bis G) und des oder der Stabilisators/Stabilisatoren in zwei oder mehr Teile auf und gibt diese Teile zu verschiedenen Zeitpunkten des Herstellungsverfahrens zu. Beispielsweise kann man einen Teil der Komponenten D) und E) bereits der wässrigen Dispersion/Emulsion des Pfropfcopolymerisates A) bzw. A') (vor, während oder bevorzugt nach der Polymerisationsreaktion von A) bzw. A')) zufügen, und den verbliebenen Teil erst später während der Vermischung der Komponenten A) bzw. A') bis G) und des oder der Stabilisator/en im Extruder oder anderen Mischvorrichtungen.

Ganz besonders bevorzugt gibt man einen Teil der Komponente D) und einen Teil der Komponente E) zu der Dispersion/Emulsion des Pfropfcopolymerisates A) bzw. A') hinzu, und den restlichen Teil von D) und E) während der Vermischung der Komponenten A) bis G) und des oder der Stabilisatoren im Extruder.

Bevorzugt liegt zumindest derjenige Teil von D) und E), welcher der Pfropfcopolymerisat-Dispersion zugefügt wird, als wässrige Dispersion vor, d.h. man fügt der Dispersion von A) bzw. A') eine Dispersion von D) und E) (als Mischung oder getrennt in zwei Dispersionen) hinzu.

Bevorzugt beträgt der Anteil von Komponente D), welcher bereits der wässrigen Dispersion/Emulsion des Pfropfcopolymerisates A) bzw. A') zugefügt wird, 20 bis 100 Gew.-%, bezogen auf die Gesamtmenge von D). Für Komponente E) beträgt der entsprechende Anteil bevorzugt 30 bis 100 Gew.-%, bezogen auf die Gesamtmenge von E).

Ein anderes bevorzugtes Herstellungsverfahren ist demnach gekennzeichnet durch
1) Herstellen des Pfropfcopolymerisates A) bzw. A') nach dem Verfahren der Emulsionspolymerisation,
2) Zugeben eines Teils oder der Gesamtmenge der Komponente D) und eines Teils oder der Gesamtmenge der Komponente E) zur wässrigen Dispersion bzw. Emulsion vor, während oder nach der Polymerisationsreaktion von A) bzw. A'),
3) Zugeben des verbliebenen Teils, sofern vorhanden, der Komponenten D) und E), in eine Mischvorrichtung, in der die Komponenten A), B) bzw. A'), sofern vorhanden B') und/oder B"), und gegebenenfalls C), E), F), G) und der oder die Stabilisator(en) vermischt werden, wobei eine im Wesentlichen schmelzflüssige Polymermischung entsteht,
4) schnelles Abkühlen der im Wesentlichen schmelzflüssigen Polymermischung innerhalb 10 sec,
wobei die Komponenten D) und E) in den erfindungsgemäßen Formmassen enthalten sind.

Zusätzliche Additive werden zu dem Fachmann an sich bekannten Zeitpunkten eingesetzt.

Soweit nicht anders beschrieben oder sich aus dem Kontext ergibt, wird unter B) die Verbindungen B), B') bzw. B") verstanden. Insbesondere wird unter den Komponenten A) bis G) die Komponenten A), B), C), D), E), F) und G) gemäß erster Ausführungsform und die Komponenten A), B'), B"), C), D), E), F), und G) gemäß zweiter Ausführungsform verstanden.

### Eigenschaften der Formmassen

Die erfindungsgemäßen Formmassen zeichnen sich durch eine sehr gute Beständigkeit gegen Witterungseinflüsse aus, und haben zugleich ein ausgewogenes Profil mechanischer Eigenschaften, insbesondere eine hohe Zähigkeit auch nach der Bewitterung bzw. nach der Wärmelagerung. Die gute Bewitterungsbeständigkeit bzw. Wärmealterungsbeständigkeit geht demnach nicht zu Lasten der mechanischen Eigenschaften. Die erfindungsgemäßen Formmassen weisen eine geringe Farbtonänderung bei Bewitterung bzw. nach der Wärmelagerung auf und bilden in staubiger Umgebung nur schwache Staubfiguren. Ihre Farbmitteldispergierung ist verbessert, ebenso ihre Entformbarkeit beim Spritzguss.

Aus den Formmassen lassen sich Formkörper, Fasern und Folien aller Art herstellen. Die erfindungsgemäßen thermoplastischen Formmassen können nach den bekannten Verfahren der Thermoplastverarbeitung verarbeitet werden, also z.B. durch Extrudieren, Spritzgießen, Kalandrieren, Hohlkörperblasen, Pressen oder Sintern.

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben.

Der d₁₀-Wert gibt denjenigen Teilchendurchmesser an, bei dem 10 Gew.-% aller Teilchen einen kleineren und 90 Gew.-% einen größeren Durchmesser haben. Umgekehrt gilt für den d₉₀-Wert, dass 90 Gew.-% aller Teilchen einen kleineren und 10 Gew.-% einen größeren Durchmesser haben als derjenige Durchmesser, der dem d₉₀-Wert entspricht. Der gewichtsmittlere Teilchendurchmesser d₅₀ bzw. volumenmittlere Teilchendurchmesser D₅₀ gibt denjenigen Teilchendurchmesser an, bei dem 50 Gew.-% bzw. Vol.-% einen kleineren Teilchendurchmesser aufweisen, d₁₀-, d₅₀- und d₉₀-Wert charakterisieren die Breite Q der Teilchengrößenverteilung, wobei Q = (d₉₀-d₁₀)/d₅₀. Je kleiner Q ist, desto enger ist die Verteilung.

Die vorliegende Erfindung wird anhand der nachfolgend beschriebenen Beispiele näher erläutert:

### Beispiel 1: Herstellung eines hyperverzweigten Polyisocyanats

In einem Reaktionsgefäß mit Rührer, Gaseinleitrohr und Tropftrichter mit Druckausgleich werden 1000 g Isophorondiisocyanat (IPDI) unter Stickstoffeinleitung vorgelegt und bei Raumtemperatur unter gutem Rühren innerhalb 1 min 300 g Trimethylolpropan, gelöst in 1300 g trockenem Essigester, zugegeben. Nach Zudosierung von 0,1 g Dibutylzinn-dilaurat wird die Reaktionsmischung unter Rühren auf 60°C erwärmt und die Abnahme des NCO-Gehaltes titrimetrisch verfolgt. Bei Erreichen eines NCO-Gehaltes von 5,5 Gew.-% weist das Reaktionsprodukt eine mittlere Funktionalität bezüglich NCO von 3 und bezüglich OH von 1 auf. Nun werden dem Additionsprodukt 430 g BASONAT HI 100, gelöst in 430 g trockenem Essigester innerhalb 1 min zugesetzt und die Mischung weitere 3 h bei 60°C gerührt. Das Endprodukt weist einen NCO-Gehalt von 5,5 Gew.-% auf.

Die mittlere Molmasse des Polyisocyanats beträgt berechnet ca. 2850 g/mol, die mittlere NCO-Funktionalität beträgt ca. 7,4.

BASONAT^{®}HI 100 (BASF AG): aliphatisches Polyisocyanat auf Basis Hexamethylendiisocyanat, die mittlere Funktionalität beträgt 3,7 NCO-Gruppen pro Molekül.

### Beispiel 2: Herstellung eines phenolischen Wirkstoftbausteins

In einen 500 ml Rundkolben mit Rührer, Gaseinleitrohr und Destillationsbrücke werden unter Einleiten von trockenem Stickstoff 609 g Pluriol^{®} E 200 (BASF AG), 175 g Ralox^{®} 35 (Firma Raschig) und 2,8 g Weston^{®} DHOP (Fa. General Electric) gegeben. Man erwärmt das Gemisch auf 145°C und gibt 1,8 g Kaliummethanolat zu. Das entstehende Methanol wird über die Destillationsbrücke entfernt und in einer Kühlfalle gesammelt.

Nach Beendigung der Methanolfreisetzung bei 145°C (ca. 2 h) wird das Reaktionsgemisch auf 80°C abgekühlt. Anschließend werden 2,5 g 85%-ige Phosphorsäure zur Neutralisation des Produktes zugegeben. Es wird noch 15 min bei 80°C gerührt und anschließend mit Wasser gewaschen. Dazu werden 1000 ml destilliertes Wasser in einem Becherglas auf 40°C erwärmt und das 80°C warme Produkt langsam unter intensivem Rühren in das Wasser gegeben. Anschließend wird die wässrige Mischung 30 min gerührt, bis zur Phasentrennung stehen gelassen und die Wasserphase vom Produkt dekantiert. Dieser Waschvorgang wird nochmals wiederholt. Das Produkt wird anschließend am Rotationsverdampfer bei ca. 80°C und 10 mbar getrocknet.

### Beispiel 3: Erfindungsgemäßer Stabilisator (HALS)

In einem Reaktionsgefäß mit Rührer, Gaseinleitrohr und Tropftrichter mit Druckausgleich werden 800 g der Lösung des hyperverzweigten Polyisocyanats in Essigester aus Beispiel 1 unter Stickstoffeinleitung bei Raumtemperatur vorgelegt und 180 g 1,2,2,6,6-Pentamethylpiperidin-4-ol, gelöst in 180 g trockenem Essigester, innerhalb 2 min zugegeben. Nach Zugabe von 0,5 g Dibutylzinn-dilaurat wird die Mischung 6 h bei 60°C gerührt. Anschließend werden 100 g Methanol zugesetzt und weiter 2 h bei 60°C gerührt, um Reste von Isocyanatgruppen zu neutralisieren. Danach werden die Lösungsmittel am Rotationsverdampfer im Vakuum entfernt. Das Produkt weist eine berechnete Molmasse von ca. 4115 g/mol und eine Anzahl von im Mittel 7,4 HALS-Wirkstoffgruppen pro Molekül auf.

### Beispiel 4: Erfindungsgemäßer Stabilisator (Phenol)

In einem Reaktionsgefäß mit Rührer, Gaseinleitrohr und Tropftrichter mit Druckausgleich werden 400 g der Lösung des Polyisocyanats in Essigester aus Beispiel 1 unter Stickstoffeinleitung bei Raumtemperatur vorgelegt und 200 g des phenolischen Wirkstoffbausteins aus Beispiel 2, gelöst in 200 g trockenem Essigester, innerhalb 2 min zugegeben. Nach Zugabe von 0,5 g Dibutylzinn-dilaurat wird die Mischung 8 h bei 60°C gerührt, um Reste von Isocyanatgruppen zu neutralisieren. Anschließend werden die Lösungsmittel am Rotationsverdampfer im Vakuum entfernt. Das Produkt weist eine berechnete Molmasse von ca. 5650 g/mol und einer Anzahl von im Mittel 7,4 phenolischen Wirkstoffgruppen pro Molekül auf.

### Beispiel 5: Erfindungsgemäßer Stabilisator (PU-HALS-Phenol)

In einem Reaktionsgefäß mit Rührer, Gaseinleitrohr und Tropftrichter mit Druckausgleich werden 600 g der Lösung des Polyisocyanats in Essigester aus Beispiel 2 unter Stickstoffeinleitung bei Raumtemperatur vorgelegt und 100 g des Phenols aus Beispiel 3, gelöst in 100 g trockenem Essigester, innerhalb 1 min zugetropft. Nach Zugabe von 0,5 g Dibutylzinn-dilaurat wird die Mischung 6 h bei 60°C gerührt. Anschließend werden 90 g 1,2,2,6,6-Pentamethylpiperidin-4-ol, gelöst in 90 g trockenem Essigester zugegeben und nochmals 6 h bei 60°C gerührt. Danach werden 50 g Methanol zugesetzt und 2 h bei 60°C gerührt, um Reste von Isocyanatgruppen zu neutralisieren. Danach wird das Lösungsmittel am Rotationsverdampfer im Vakuum entfernt. Das Produkt weist eine berechnete Molmasse von etwa 4630 g/mol und eine Anzahl von im Mittel 2,5 phenolischen und 4,9 HALS-Wirkstoffgruppen pro Molekül auf.

Die erfindungsgemäßen Stabilisatoren können sowohl in die Kautschukdispersion eingearbeitet werden und mit diesem gemeinsam aufgearbeitet als auch auf dem Extruder eingearbeitet werden.

Zum Vergleich bzw. zur Ergänzung werden Tinuvin 770, Tinuvin P, Wingstay L und BB12P eingesetzt.

Tinuvin 770 (Ciba^{®}) Bis(2,2,6,6-tetramethyl-4-piperidinyl)sebacat, Tinuvin P (Ciba^{®}) 2-(2-Hydroxy-5-methylphenyl)-benzotriazol, Wingstay L 4,4'-Thio-bis-(6-tert.-butyl-m-kresol; BB12P.

Die Stabilisatoren PU-Phenol, PU-HALS und PU-Phenol-HALS wurden auf zwei Arten in ASA Polymerisate eingearbeitet: a) in die Kautschukdispersion und b) am Extruder. Es wird extrudiert und anschließend entsprechend dem Fachmann bekannten analytischen Verfahren (Spritzguss, Schlagversuch, etc) untersucht.

### Stabilisator auf Basis des sterisch gehinderten Phenols (PU-Phenol)

PU-Phenol wird als Pulver in die Kautschukdispersion eingearbeitet sowie anschließend gemeinsam mit dem Kautschuk mit MgSO₄ ausgefällt. Das so erhaltenen Gemisch aus Feuchtkautschuk und Stabilisator wird auf einem Extruder entwässert und gleichzeitig mit SAN und weiteren Stabilisatoren (Tinuvin 770, Tinuvin P) vermischt. Als Vergleichsversuche werden Abmischungen mit BB12P und Wingstay L durchgeführt (Zusammensetzung Tabelle 1).

**Tabelle 1: Phenolische Stabilisatoren: Zusammensetzung der erfindungsgemäßen und der Vergleichsbeispiele**

| | | Phenolischer Stabilisator | Gew-% | HALS | Gew-% | UV-Absorber | Gew-% |
|---|---|---|---|---|---|---|---|
| 114-5 | V | BB12P | 0,2 | Tinuvin 770 | 0,5 | Tinuvin P | 0,5 |
| 114-8 | V | Wingstay L | 0,2 | Tinuvin 770 | 0,5 | Tinuvin P | 0,5 |
| 114-9 | E | PU-Phenol | 0,2 | Tinuvin 770 | 0,5 | Tinuvin P | 0,5 |
| 114-11 | E | PU-Phenol | 0,1 | Tinuvin 770 | 0,5 | Tinuvin P | 0,5 |

| | | | | | | | |
|---|---|---|---|---|---|---|---|
| V = Vergleichsbeispiel, E = Erfindungsgemäßes Beispiel | | | | | | | |

Die erfindungsgemäßen Abmischungen mit PU-Phenol (0,1% und 0,2%) werden in der Wärme (90°C) für 20 Wochen gelagert, sowie mit UV-Licht für 4000 h belichtet. Die Ergebnisse dieser Bewitterung sind in den Diagrammen der Abbildungen 1-4 dargestellt und werden in Tabelle 2 zusammengefasst.

Abbildung 1 zeigt für PU-Phenol den Gelbwert nach Wärmelagerung bei einer Temperatur von 90°C. Auf der Abszisse ist die Lagerzeit in Wochen und auf der Ordinate der Gelbwert dargestellt. Die folgenden Zusammensetzungen sind dargestellt:

| | | |
|---|---|---|
| Quadrat: | 114-5 | Tinuvin 770 (0,5 %), BB12P (0,2%) |
| Karo: | 114-8 | Tinuvin 770 (0,5 %), Wingstay L (0,2 %) |
| Dreieck: | 114-11 | Tinuvin 770 (0,5 %), PU-Phenol (0,1%) |
| Kreis: | 114-9 | Tinuvin 770 (0,5 %), PU-Phenol (0,2%) |

Abbildung 2 zeigt für PU-Phenol die Farbabweichung (dE) nach Wärmelagerung bei einer Temperatur von 90°C. Auf der Abszisse ist die Lagerzeit in Wochen und auf der Ordinate dE dargestellt. Die folgenden Zusammensetzungen sind dargestellt:

| | | |
|---|---|---|
| Quadrat: | 114-5 | Tinuvin 770 (0,5 %), BB12P (0,2%) |
| Karo: | 114-8 | Tinuvin 770 (0,5 %), Wingstay L (0,2 %) |
| Dreieck: | 114-11 | Tinuvin 770 (0,5 %), PU-Phenol (0,1%) |
| Kreis: | 114-9 | Tinuvin 770 (0,5 %), PU-Phenol (0,2%) |

Abbildung 3 zeigt für PU-Phenol den Gelbwert nach Xenotest 1200 CPS. Auf der Abszisse ist die Lagerzeit in Stunden und auf der Ordinate der Gelbwert dargestellt. Die folgenden Zusammensetzungen sind dargestellt:

| | | |
|---|---|---|
| Quadrat: | 114-5 | Tinuvin 770 (0,5 %), BB12P (0,2%) |
| Karo: | 114-8 | Tinuvin 770 (0,5 %), Wingstay L (0,2 %) |
| Dreieck: | 114-11 | Tinuvin 770 (0,5 %), PU-Phenol (0,1%) |
| Kreis: | 114-9 | Tinuvin 770 (0,5 %), PU-Phenol (0,2%) |

Abbildung 4 zeigt für PU-Phenol dE nach Xenotest 1200 CPS. Auf der Abszisse ist die Lagerzeit in Stunden und auf der Ordinate dE dargestellt. Die folgenden Zusammensetzungen sind dargestellt:

| | | |
|---|---|---|
| Quadrat: | 114-5 | Tinuvin 770 (0,5 %), BB12P (0,2%) |
| Karo: | 114-8 | Tinuvin 770 (0,5 %), Wingstay L (0,2 %) |
| Dreieck: | 114-11 | Tinuvin 770 (0,5 %), PU-Phenol (0,1%) |
| Kreis: | 114-9 | Tinuvin 770 (0,5 %), PU-Phenol (0,2%) |

**Tabelle 2: Zusammenfassung der Stabilisierungswirkung der phenolischen Stabilisatoren im Vergleich mit der Standardabmischung (Standardabmischung: Tinuvin 770, BB12P, Tinuvin P)**

| | | PU-Phenol | PU-Phenol |
|---|---|---|---|
| Eingesetzte Stabilisatormenge | [Gew.-%] | 0,2 | 0,1 |
| Mechanische Eigenschaften | | o | o |
| Rheologische Eigenschaften | | o | o |
| UV-Lagerung | Gelbwert | o | o |
| | Farbabweichung | o | o |
| Wärmelagerung | Gelbwert | o | o |
| | Farbabweichung | o | o |
| Stabilisierungswirkung pro Gew.-% | | o | ++ |

| | | | |
|---|---|---|---|
| Skalierung: ++ sehr viel besser als Vergleichsbeispiel + besser als Vergleichsbeispiel o gleichwertig zum Vergleichsbeispiel - schlechter als Vergleichsbeispiel - - sehr viel schlechter als Vergleichsbeispiel | | | |

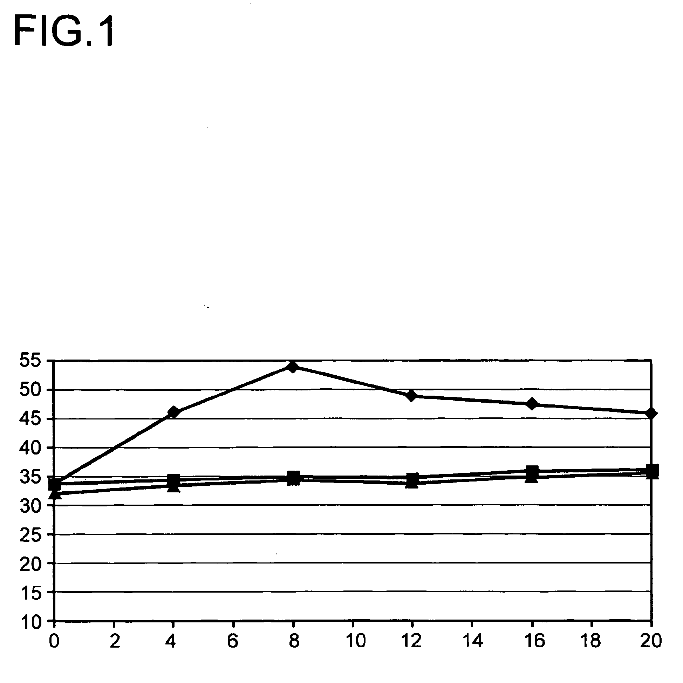

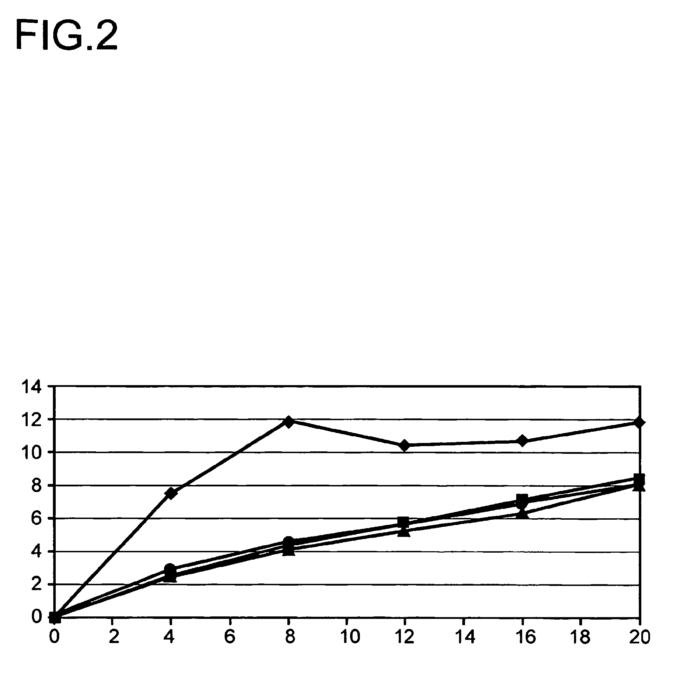

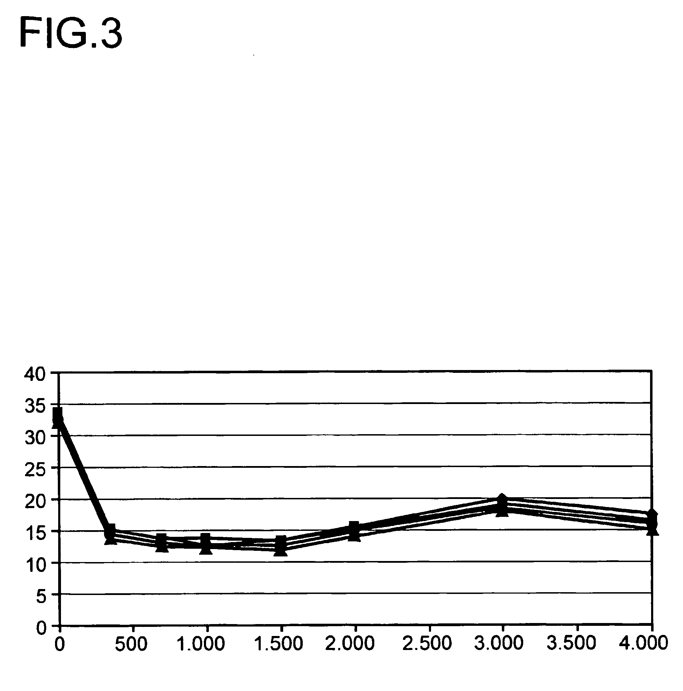

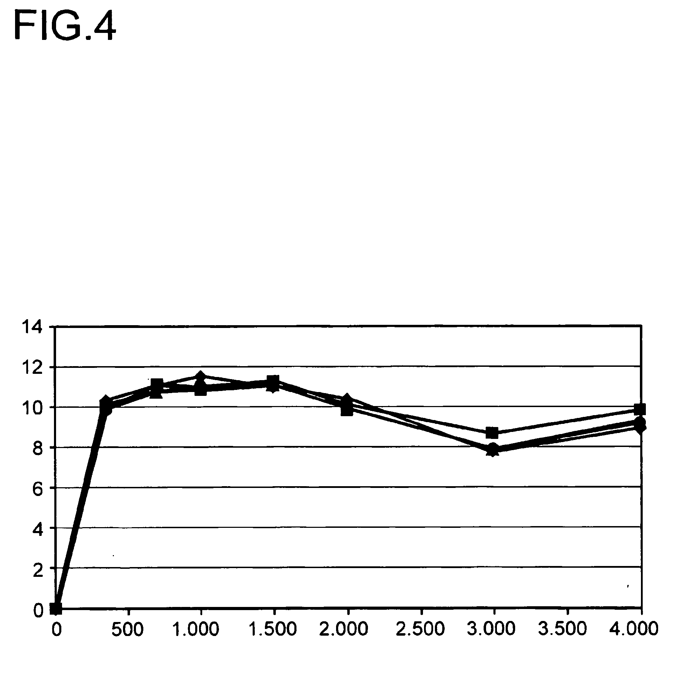

Die Abbildungen 1 bis 4 verdeutlichen, dass das erfindungsgemäße Harz mit PU-Phenol in der Wärmelagerung und im Xenotest 1200 CPS (Wetterbeständigkeitstest) den im Wesentlichen gleichen Gelbwert sowie gleiche Farbabweichung zeigt wie das Vergleichbeispiel mit BB120. Die gleiche Stabilisierungswirkung wird in einem erfindungsgemäßen Beispiel aber bereits mit einer niedrigen Stabilisatormenge von 0,1 Gew.-% erreicht.

### Stabilisator auf Basis des sterisch gehinderten Amins (PU-HALS)

Der erfindungsgemäße Stabilisator PU-Hals wird zusammen mit weiteren Stabilisatoren auf dem Extruder eingearbeitet. Entsprechend wurde als Vergleichsbeispiel eine Abmischung mit Tinuvin 770 hergestellt (Zusammensetzung Tabelle 3).

**Tabelle 3: HALS- Stabilisatoren: Zusammensetzung der erfindungsgemäßen und der Vergleichsbeispiele**

| | | HALS | Gew.-% | Phenolischer Stabilisator | Gew.-% | UV-Absorber | Gew.-% |
|---|---|---|---|---|---|---|---|
| 114-5 | V | Tinuvin 770 | 0,5 | BB12P | 0,2 | Tinuvin P | 0,5 |
| 114-6 | E | PU-HALS | 0,25 | BB12P | 0,2 | Tinuvin P | 0,5 |
| 114-7 | E | PU-HALS | 0,5 | BB12P | 0,2 | Tinuvin P | 0,5 |

| | | | | | | | |
|---|---|---|---|---|---|---|---|
| V = Vergleichsbeispiel, E = erfindungsgemäßes Beispiel | | | | | | | |

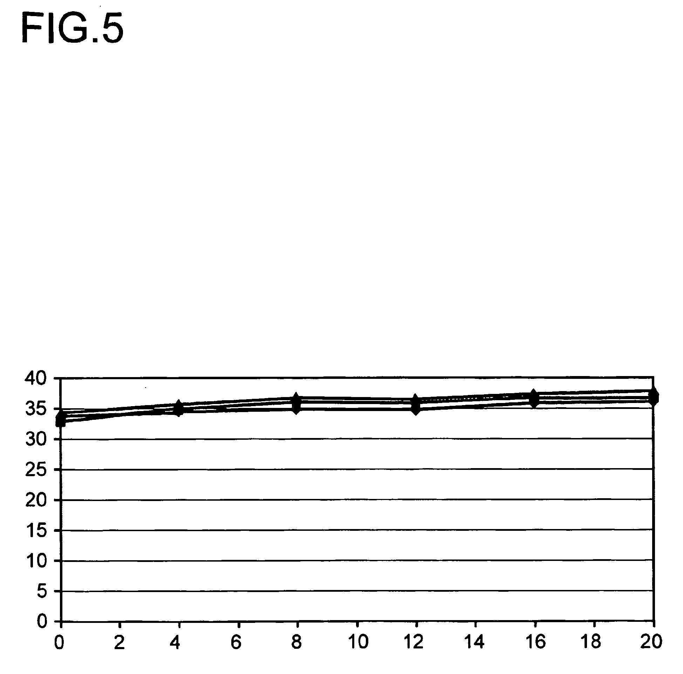

Die erfindungsgemäßen Abmischungen mit PU-HALS (0,25 % und 0,5 %) sowie das Vergleichsbeispiel werden in der Wärme (90°C) für 20 Wochen gelagert, sowie mit UV-Licht für 4000 h belichtet. Die Ergebnisse dieser Bewitterung sind in dem Diagramm der Abbildungen 5 bis 8 dargestellt und werden in Tabelle 4 zusammengefasst.

Abbildung 5 zeigt für PU-Hals den Gelbwert nach Wärmelagerung bei einer Temperatur von 90°C. Auf der Abszisse ist die Lagerzeit in Wochen und auf der Ordinate der Gelbwert dargestellt. Die folgenden Zusammensetzungen sind dargestellt:

| | | |
|---|---|---|
| Quadrat: | 114-6 | PU-Hals (0,25 %), BB12P (0,2%) |
| Karo: | 114-5 | Tinuvin 770 (0,5 %), BB12P (0,2%) |
| Dreieck: | 114-7 | PU-Hals (0,5 %), BB12P (0,2%) |

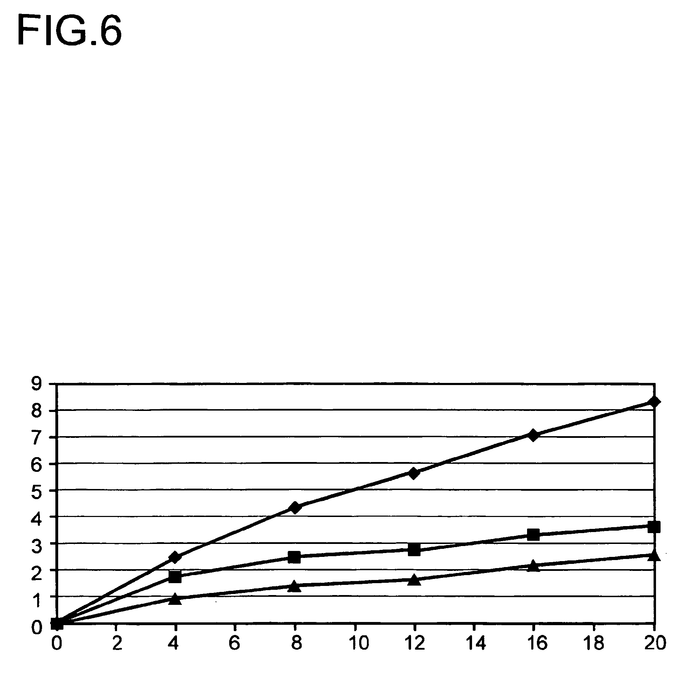

Abbildung 6 zeigt für PU-Hals dE nach Wärmelagerung bei einer Temperatur von 90°C. Auf der Abszisse ist die Lagerzeit in Wochen und auf der Ordinate dE dargestellt. Die folgenden Zusammensetzungen sind dargestellt:

| | | |
|---|---|---|
| Quadrat: | 114-6 | PU-Hals (0,25 %), BB12P (0,2%) |
| Karo: | 114-5 | Tinuvin 770 (0,5 %), BB12P (0,2%) |
| Dreieck: | 114-7 | PU-Hals (0,5 %), BB12P (0,2%) |

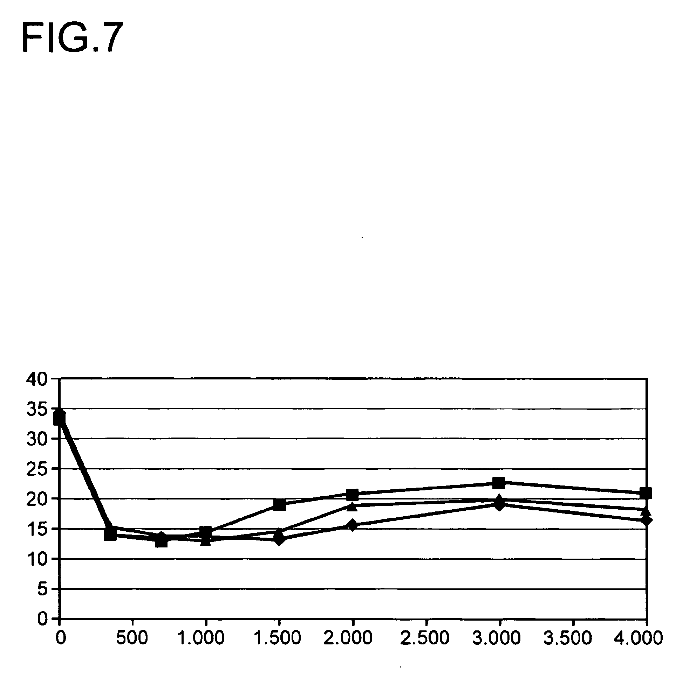

Abbildung 7 zeigt für PU-Hals den Gelbwert nach Xenotest 1200 CPS. Auf der Abszisse ist die Lagerzeit in Stunden und auf der Ordinate der Gelbwert dargestellt. Die folgenden Zusammensetzungen sind dargestellt:

| | | |
|---|---|---|
| Quadrat: | 114-6 | PU-Hals (0,25 %), BB12P (0,2%) |
| Karo: | 114-5 | Tinuvin 770 (0,5 %), BB12P (0,2%) |
| Dreieck: | 114-7 | PU-Hals (0,5 %), BB12P (0,2%) |

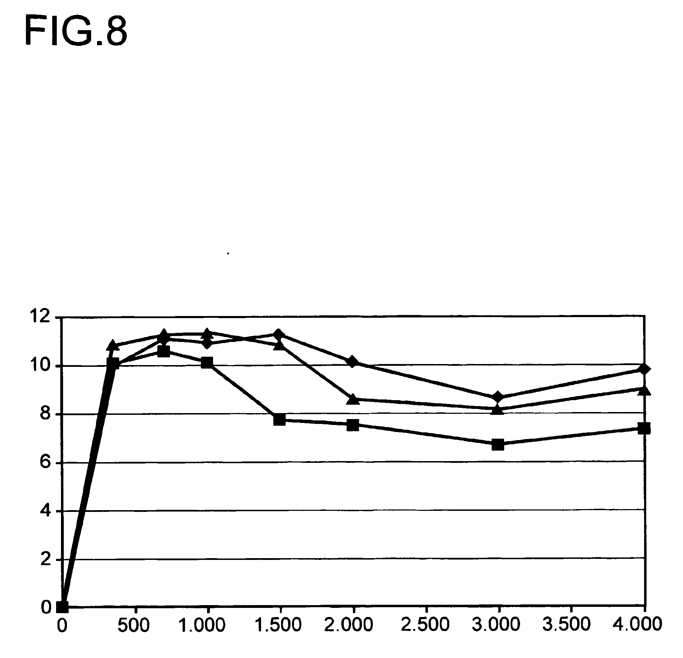

Abbildung 8 zeigt für PU-Hals dE nach Xenotest 1200 CPS. Auf der Abszisse ist die Lagerzeit in Stunden und auf der Ordinate dE dargestellt. Die folgenden Zusammensetzungen sind dargestellt:

| | | |
|---|---|---|
| Quadrat: | 114-6 | PU-Hals (0,25 %), BB12P (0,2%) |
| Karo: | 114-5 | Tinuvin 770 (0,5 %), BB12P (0,2%) |
| Dreieck: | 114-7 | PU-Hals (0,5 %), BB12P (0,2%) |

Der erfindungsgemäße Stabilisator PU-HALS zeigt gegenüber dem Vergleichsbeispiel mit Tinuvin 770 eine deutlich verbesserte Stabilisierungswirkung. Während nach Wärmelagerung PU-HALS und Tinuvin noch ähnliche Wirkung gegen Vergilbung (Abbildung 5) zeigen, wird bei der Farbabweichung dE (Abbildung 6) ein deutlicher Vorteil für PU-HALS erkennbar. Die Farbabweichung dE steigt nach 20 Wochen Wärmelagerung auf nur 2,5 an, während dE der Abmischung mit Tinuvin 770 auf über 8 ansteigt. Im Xenotest sind die Vorteile von PU-HALS ebenfalls erkennbar. Die ermittelten Gelbwerte nach 4000 Stunden UV-Belichtung liegen auf gleichem Niveau, während bei der Farbabweichung dE ein Vorteil für PU-HALS erkennbar wird. Bereits die Abmischung mit 0,25 % PU-HALS zeigt bessere Stabilisierungswirkung als Tinuvin P (0,5 %), allerdings ist eine Konzentration von PU-HALS mit 0,5 % noch etwas besser.

**Tabelle 4: Zusammenfassung der Stabilisierungswirkung der HALS- Stabilisatoren im Vergleich mit der Standardmischung (Standardmischung: Tinuvin 770, BB12P, Tinuvin P)**

| | | PU-HALS | PU-HALS |
|---|---|---|---|
| Eingesetzte Stabilisatormenge | [Gew.-%] | 0,25 | 0,5 |
| Mechanische Eigenschaften | | o | o |
| Rheologische Eigenschaften | | o | o |
| Xenotest 1200 CPS | Gelbwert YI | o | o |
| | Farbabweichung dE | + | o |
| Wärmelagerung | Gelbwert YI | o | o |
| | Farbabweichung dE | ++ | ++ |
| Stabilisierungswirkung pro Gew.-% | | + | + |

| | | | |
|---|---|---|---|
| Skalierung: ++ sehr viel besser als Vergleichsbeispiel + besser als Vergleichsbeispiel o gleichwertig zum Vergleichsbeispiel - schlechter als Vergleichsbeispiel - - sehr viel schlechter als Vergleichsbeispiel | | | |

### Erfindungsgemäßer Stabilisator auf Basis von sterisch gehindertem Phenol und HALS (PU-Phenol-HALS)

Der erfindungsgemäße Stabilisator PU-Phenol-Hals wurde auf dem Extruder eingearbeitet (Beispiele 114-2,3,4). In einer weiteren Ausführungsform wird der erfindungsgemäße Stabilisator PU-Phenol-Hals als Dispersion zu der Kautschukdispersion zugegeben und mit diesem gemeinsam gefällt und anschließend auf dem Extruder eingearbeitet (Beispiel 114-12).

Als Vergleich wurde eine Abmischung mit Tinuvin 770 und BB12P dargestellt. Die Zusammensetzungen sind in Tabelle 5 angegeben.

**Tabelle 5: Phenol/HALS-Stabilisatoren: Zusammensetzung der erfindungsgemäßen Beispiele und des Vergleichsbeispiels**

| 114- | * | ** | | Gew.-% | HALS | Gew. -% | Phenolischer Stabilisator | Gew.-% | UV-Absorber | Gew.-% |
|---|---|---|---|---|---|---|---|---|---|---|
| 2 | E | Ex | PU-Phenol-HALS | 0,5 | - | - | - | - | Tinuvin P | 0,5 |
| 3 | E | Ex | PU-Phenol-HALS | 0,25 | - | - | - | - | Tinuvin P | 0,5 |
| 4 | E | Ex | PU-Phenol-HALS | 1 | - | - | - | - | Tinuvin P | 0,5 |
| 12 | E | D | PU-Phenol-HALS | 0,5 | - | - | - | - | Tinuvin P | 0,5 |
| 5 | V | Ex | - | - | Tinu vin 770 | 0,5 | BB12P | 0,2 | Tinuvin P | 0,5 |

| | | | | | | | | | | |
|---|---|---|---|---|---|---|---|---|---|---|
| *: E = Erfindungsgemäßes Beispiel/V = Vergleichsbeispiel **: Ex = Extruderdosierung/D = Dispersionsdosierung | | | | | | | | | | |

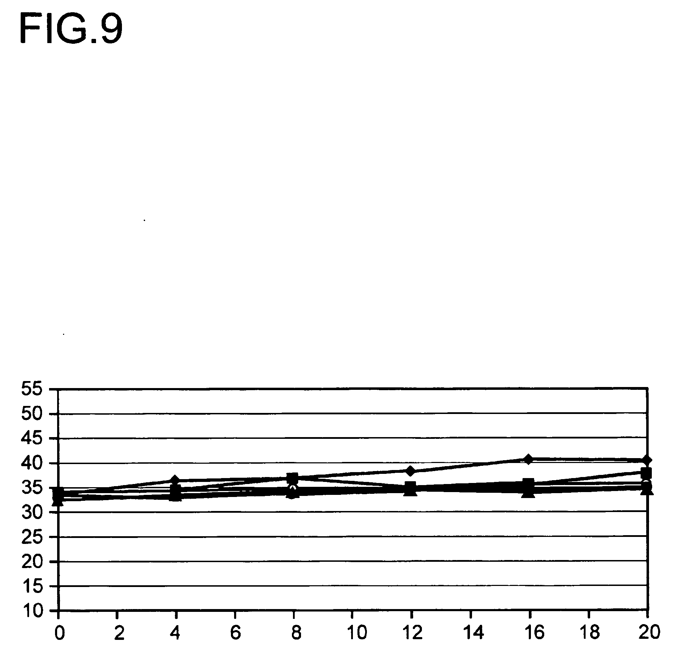

Die erfindungsgemäßen Abmischungen mit PU-Phenol-Hals sowie die Vergleichsabmischung werden in der Wärme (90°C) für 20 Wochen gelagert, sowie mit UV-Licht für 4000 h belichtet. Die Ergebnisse sind in den Abbildungen 9 bis 12 dargestellt und werden in Tabelle 6 zusammengefasst.

Abbildung 9 zeigt für PU-Phenol-Hals den Gelbwert nach Wärmelagerung bei einer Temperatur von 90°C. Auf der Abszisse ist die Lagerzeit in Wochen und auf der Ordinate der Gelbwert dargestellt. Die folgenden Zusammensetzungen sind dargestellt:

| | | |
|---|---|---|
| Quadrat: | 114-2 | PU-Phenol-Hals (0,5 %) |
| Karo: | 114-4 | PU-Phenol-Hals (1,0 %) |
| Dreieck: | 114-3 | PU-Phenol-Hals (0,25 %) |
| Kreis, hell: | 114-5 | Tinuvin 770 (0,5 %), BB12P (0,2 %) |
| Kreis, dunkel: | 114-12 | PU-Phenol-Hals-Dispersion (0,5 %) |

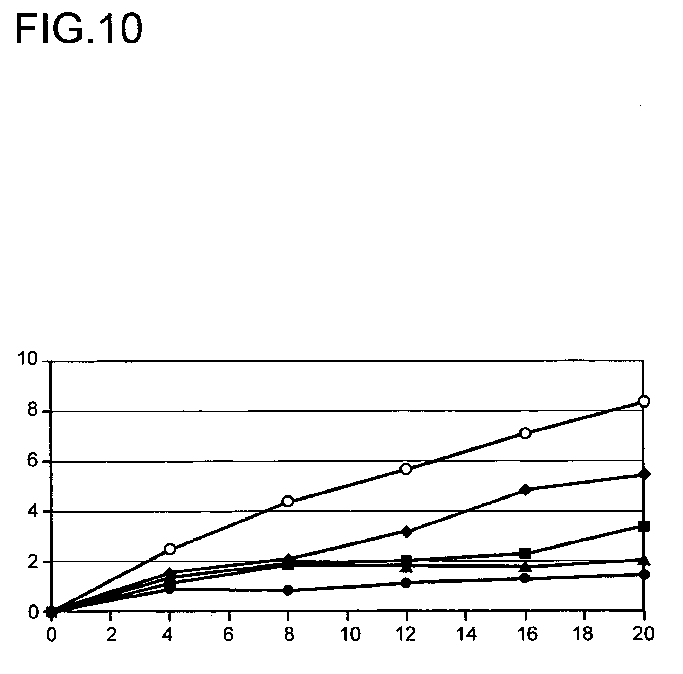

Abbildung 10 zeigt für PU-Phenol-Hals dE nach Wärmelagerung bei einer Temperatur von 90°C. Auf der Abszisse ist die Lagerzeit in Wochen und auf der Ordinate dE dargestellt. Die folgenden Zusammensetzungen sind dargestellt:

| | | |
|---|---|---|
| Quadrat: | 114-2 | PU-Phenol-Hals (0,5 %) |
| Karo: | 114-4 | PU-Phenol-Hals (1,0 %) |
| Dreieck: | 114-3 | PU-Phenol-Hals (0,25 %) |
| Kreis, hell: | 114-5 | Tinuvin 770 (0,5 %), BB12P (0,2 %) |
| Kreis, dunkel: | 114-12 | PU-Phenol-Hals-Dispersion (0,5 %) |

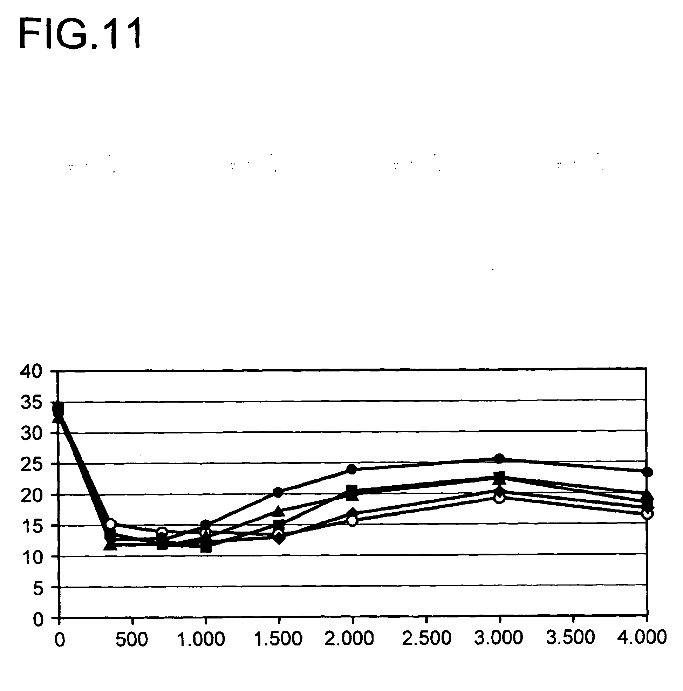

Abbildung 11 zeigt für PU-Phenol-Hals den Gelbwert nach Xenotest 1200 CPS. Auf der Abszisse ist die Lagerzeit in Stunden und auf der Ordinate der Gelbwert dargestellt. Die folgenden Zusammensetzungen sind dargestellt:

| | | |
|---|---|---|
| Quadrat: | 114-2 | PU-Phenol-Hals (0,5 %) |
| Karo: | 114-4 | PU-Phenol-Hals (1,0 %) |
| Dreieck: | 114-3 | PU-Phenol-Hals (0,25 %) |
| Kreis, hell: | 114-5 | Tinuvin 770 (0,5 %), BB12P (0,2 %) |
| Kreis, dunkel: | 114-12 | PU-Phenol-Hals-Dispersion (0,5 %) |

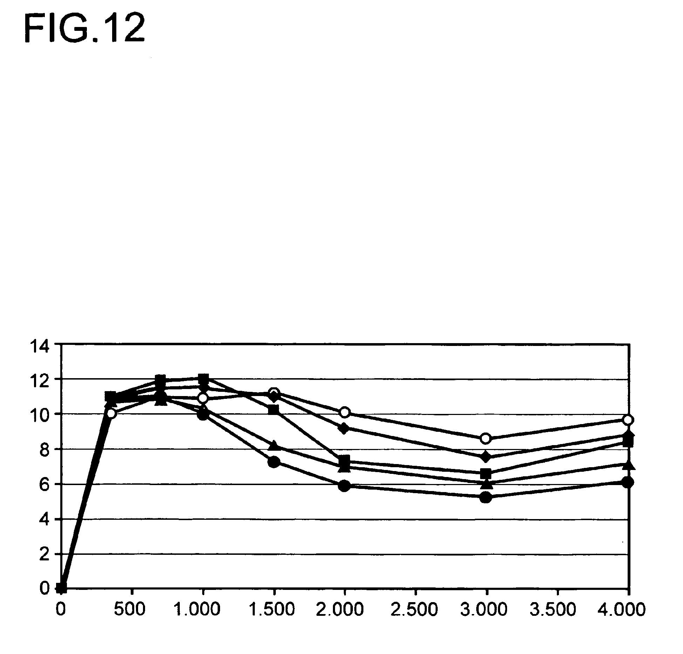

Abbildung 12 zeigt für PU-Phenol-Hals dE nach Xenotest 1200 CPS. Auf der Abszisse ist die Lagerzeit in Stunden und auf der Ordinate dE dargestellt. Die folgenden Zusammensetzungen sind dargestellt:

| | | |
|---|---|---|
| Quadrat: | 114-2 | PU-Phenol-Hals (0,5 %) |
| Karo: | 114-4 | PU-Phenol-Hals (1,0 %) |
| Dreieck: | 114-3 | PU-Phenol-Hals (0,25 %) |
| Kreis, hell: | 114-5 | Tinuvin 770 (0,5 %), BB12P (0,2 %) |
| Kreis, dunkel: | 114-12 | PU-Phenol-Hals-Dispersion (0,5 %) |

Im Gelbwert nach Wärmelagerung über 20 Wochen zeigt sich der neue Stabilisator PU-Phenol-HALS als ähnlich effektiv wie die Vergleichsmischung mit Tinuvin 770 und BB12P. Eine deutlich bessere Wirkung von PU-Phenol-HALS wird bei Betrachtung der Farbabweichung dE nach Wärmelagerung deutlich (Abbildung 10). Während das Vergleichsbeispiel mit Tinuvin 770 und BB12P nach 20 Wochen bei 90°C eine Farbabweichung von über 8 aufweist, liegen die Werte für PU-Phenol-HALs zwischen 1,4 und 5,4. Das beste Ergebnis für dE mit 1,4 wurde in der Variante "Dispersion" erzielt. Die Stabilisatormenge war in diesem Beispiel mit 0,5 Gew.-% zudem noch geringer als im Vergleichsbeispiel mit 0,7 Gew.-% (nur Summe Tinuvin 770 und BB12P). Auch die Varianten, in denen der Stabilisator PU-Phenol-HALS im Extruder eingemischt wurde, zeigen deutlich bessere Wirkung als die Vergleichsstabilisatormischung. Besonders die Abmischung mit 0,25 Gew.-% zeigt in der Wärmelagerung mit dE gleich 2,1 eine sehr gute Wirkung und ist damit bezogen auf die eingesetzte Menge dem Vergleichsbeispiel zusätzlich überlegen.

Ein ähnliches Bild zeigt sich auch im Belichtungstest. Nach 4000 h Belichtung liegen beim Gelbwert alle Abmischungen auf einem sehr ähnlichen Niveau, mit Ausnahme der Dispersionsvariante vom PU-Phenol-HALS, welche etwas höher liegt als das Vergleichsbeispiel. Betrachtet man wieder die Farbabweichung dE, so liegen wiederum alle Abmischungen mit PU-Phenol-HALS deutlich besser als Vergleichsbeispiel (Abbildung 12). Die Dispersionsvariante mit 0,5 Gew.-% Stabilisatormenge zeigt nach 4000 Stunden Belichtung die niedrigste Farbabweichung (dE = 6,1). Sehr gut ist ebenfalls die Extruder-Einmischung von PU-Phenol-HALS in einer Konzentration von nur 0,25 Gew.-%, es wird eine Farbabweichung von nur 7,2 erreicht. Dies ist eine sehr gute Stabilisierung, welche zudem durch eine geringe Menge von Stabilisator erreicht wird.

**Tabelle 6: Zusammenfassung der Stabilisierungswirkung von PU-Phenol-HALS**

| | | PU-Phenol-Hals | PU-Phenol-Hals | PU-Phenol-Hals | PU-Phenol-Hals |
|---|---|---|---|---|---|
| Eingesetzte Stabilisatormenge | [Gew.-%] | 0,25 | 0,5 | 1,0 | 0,5 |
| Dosiert in | | Extruder | Extruder | Extruder | Dispersion |
| Mechanische Eigenschaften | | o | o | O | o |
| Rheologische Eigenschaften | | o | o | O | o |
| UV-Lagerung | Gelbwert YI | o | o | O | - |
| | Farbabw. dE | ++ | + | + | ++ |
| Wärmelagerung | Gelbwert YI | o | o | - | o |
| | Farbabw. dE | ++ | ++ | ++ | ++ |

| | | | | | |
|---|---|---|---|---|---|
| Skalierung: ++ sehr viel besser als Vergleichsbeispiel + besser als Vergleichsbeispiel o gleichwertig zum Vergleichsbeispiel - schlechter als Vergleichsbeispiel - - sehr viel schlechter als Vergleichsbeispiel | | | | | |

## Patentansprüche

1. Thermoplastische Formmassen, enthaltend, jeweils bezogen auf die Komponenten A) und B),
A) 5 bis 70 Gew.-% mindestens eines Pfropfcopolymerisates A) aus, jeweils bezogen auf A),
a1) 10 bis 90 Gew.-% mindestens einer kautschukelastischen Pfropfgrundlage mit einer Glasübergangstemperatur unter 0 °C,
a2) 10 bis 90 Gew.-% mindestens einer Pfropfauflage aus, bezogen auf a2),
a21) 50 bis 100 Gew.-% mindestens einer Styrolverbindung,
a22) 0 bis 50 Gew.-% Acrylnitril, Methacrylnitril oder deren Mischungen,
a23) 0 bis 50 Gew.-% mindestens eines weiteren monoethylenisch ungesättigten Monomeren,
B) 30 bis 90 Gew.-% eines harten Copolymerisates aus, jeweils bezogen auf B),
b1) 50 bis 100 Gew.-% mindestens einer Styrolverbindung,
b2) 0 bis 50 Gew.-% Acrylnitril, Methacrylnitril oder deren Mischungen,
b3) 0 bis 50. Gew.-% mindestens eines weiteren monoethylenisch ungesättigten Monomeren,
**dadurch gekennzeichnet, dass** die thermoplastische Formmasse zusätzlich mindestens einen Stabilisator enthält, der aufgebaut ist aus
(1) einem oder mehreren Polyisocyanat(en) mit im Mittel 2,2 bis 8 Isocyanatgruppen pro Molekül
(2) und mindestens einer Wirkstoffgruppe (2a), (2b) oder (2c) mit (2a) 0,1 bis 1,0 Mol einer oder mehrerer Wirkstoffgruppe(n), pro Mol Isocyanatgruppen, auf Phenolbasis,
(2b) 0,1 bis 1,0 Mol einer oder mehrer Wirkstoffgruppe(n), pro Mol Isocyanatgruppen, auf Basis von sterisch gehinderten Aminen,
(2c) 0,1 bis 1,0 Mol in Summe mindestens zweier unterschiedlicher Wirkstoffgruppen, pro Mol Isocyanatgruppen, wobei eine Wirkstoffgruppe auf Phenol basiert und die andere Wirkstoffgruppe auf sterisch gehinderten Aminen basiert,
wobei die Wirkstoffgruppe(n) Kunststoffe gegen Schädigung durch Wärme, UV-Strahlung, Oxidation, Hydrolyse oder mechanische Einwirkung bei der Verarbeitung schützen, und
(1) pro Mol Isocyanatgruppen 0 bis 0,9 Mol einer oder mehrerer Hilfsgruppen, welche die Eigenschaften des Stabilisators modifizieren, wobei die Hilfsgruppen über eine funktionelle Gruppe B, die mit den Isocyanatgruppen reagieren kann, an die Polyisocyanate angekoppelt sind.

2. Thermoplastische Formmassen, enthaltend, jeweils bezogen auf die Komponenten A), B') und B",
A') 5 bis 70 Gew.-% mindestens eines Pfropfcopolymerisates A) aus, jeweils bezogen auf A,
a1') 10 bis 90 Gew.-% mindestens einer kautschukelastischen Pfropfgrundlage mit einer Glasübergangstemperatur unter 0 °C,
a2') 10 bis 90 Gew.-% mindestens einer Pfropfauflage aus, jeweils bezogen auf a2),
a21) 5 bis 85 Gew.-% mindestens einer Styrolverbindung,
a22) 0 bis 50 Gew.-% Acrylnitril, Methacrylnitril oder deren Mischungen,
a23) 0 bis 50 Gew.-% mindestens eines weiteren monoethylenisch ungesättigten Monomeren,
a24) 15 bis 95 Gew.-% Alkylmethacrylat
B') 0 bis 65 Gew.-% eines Alkylmethacrylat-Polymerisates, erhältlich durch Polymerisation einer Mischung, bestehend aus, jeweils bezogen auf B'),
b1') 50 bis 100 Gew.-% Alkylmethacrylat,
b2') 0 bis 15 Gew.-% eines C₁-C₈-Alkylesters der Acrylsäure,
b3') 0 bis 50 Gew.-% mindestens eines weiteren monoethylenisch ungesättigen Monomeren,
B") 0 bis 65 Gew.-% eines Copolymerisates, erhältlich durch Polymerisation einer Mischung, bestehend aus, jeweils bezogen auf B"),
b1") 50 bis 100 Gew.-% eines vinylaromatischen Monomeren,
b2") 0 bis 50 Gew.-% Acrylnitril, Methacrylnitril oder deren Mischungen,
b3") 0 bis 50 Gew.-% mindestens eines weiteren monoethylenisch ungesättigten Monomeren,
**dadurch gekennzeichnet, dass** die thermoplastische Formmasse zusätzlich mindestens einen Stabilisator enthält, der aufgebaut ist aus
(1) einem oder mehreren Polyisocyanaten mit im Mittel 2,2 bis 8 Isocyanatgruppen pro Molekül,
(2) und mindestens einer Wirkstoffgruppe (2a), (2b) oder (2c) mit
(2a) 0,1 bis 1,0 Mol einer oder mehrerer Wirkstoffgruppe(n), pro Mol Isocyanatgruppen, auf Phenolbasis,
(2b) 0,1 bis 1,0 Mol einer oder mehrer Wirkstoffgruppe(n), pro Mol Isocyanatgruppen, auf Basis von sterisch gehinderten Aminen,
(2c) 0,1 bis 1,0 Mol mindestens zweier unterschiedlicher Wirkstoffgruppen, pro Mol Isocyanatgruppen, wobei eine Wirkstoffgruppe auf Phenol basiert und die andere Wirkstoffgruppe auf sterisch gehinderten Aminen basiert,
wobei die Wirkstoffgruppe(n) Kunststoffe gegen Schädigung durch Wärme, UV-Strahlung, Oxidation, Hydrolyse oder mechanische Einwirkung bei der Verarbeitung schützt/schützen, und
(3) pro Mol Isocyanatgruppen 0 bis 0,9 Mol einer oder mehrerer Hilfsgruppen, welche die Eigenschaften des Stabilisators modifizieren, wobei die Hilfsgruppen über funktionelle Gruppen, die mit den Isocyanatgruppen reagieren können, an die Polyisocyanate angekoppelt sind.

3. Thermoplastische Formmassen nach Anspruch 1 oder 2, **dadurch gekennzeichnet, dass** die thermoplastischen Formmassen zusätzlich folgende Zusatzstoffe enthalten:
C) 0 bis 5 Gew.-% mindestens eines Dreiblockcopolymeren X-Y-X mit einem Mittelblock Y aus Propylenoxideinheiten und endständigen Blöcken X aus Ethylenoxideinheiten,
D) 0 bis 5 Gew.-% mindestens eines butylierten Reaktionsproduktes von p-Cresol mit Dicyclopentadien der Formel (I) 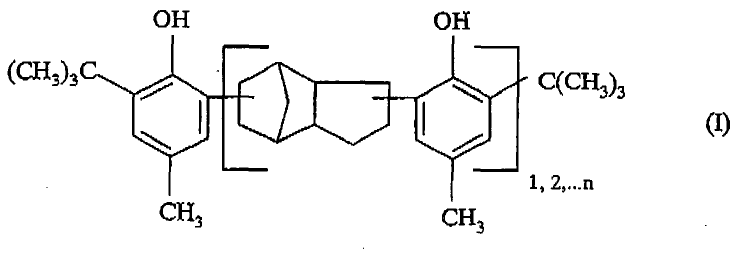 mit n ≤ 10,
E) 0 bis 5 Gew.-% mindestens eines Thiocarbonsäureesters,
F) 0 bis 5 Gew.-% mindestens eines Alkalimetallsalzes oder Erdalkalimetallsalzes einer C₆-C₂₀-Carbonsäure,
G) 0 bis 30 Gew.-% weiterer üblicher Zusatzstoffe.

4. Thermoplastische Formmassen nach einem der Ansprüche 1 oder 3, bei denen die Pfropfgrundlage a1) ein Polymerisat ist aus, jeweils bezogen auf a1),
a11) 60 bis 100 Gew.-% mindestens eines konjugierten Diens, C₁-C₁₀-Alkylacrylates oder deren Mischungen,
a12) 0 bis 35 Gew.-% mindestens eines weiteren monoethylenisch ungesättigten Monomeren,
a13) 0 bis 10 Gew.-% mindestens eines vernetzenden Monomeren.

5. Thermoplastische Formmassen nach einem der Ansprüche 2 oder 3, bei denen die Pfropfgrundlage a1) ein Polymerisat ist aus, jeweils bezogen auf a1),
a11) 60 bis 100 Gew.-% mindestens eines konjugierten Diens, C₁-C₁₀-Alkylacrylates oder deren Mischungen,
a12) 0 bis 35 Gew.-% mindestens eines weiteren monoethylenisch ungesättigten Monomeren,
a13) 0 bis 10 Gew.-% mindestens eines vernetzende Monomeren.

6. Verfahren zur Herstellung der thermoplastischen Formmassen gemäß einem der Ansprüche 1,3 oder 4, **gekennzeichnet durch**
1) Herstellen des Pfropfcopolymerisates A) nach dem Verfahren der Emulsionspolymerisation,
2) Vermischen des Pfropfcopolymerisates A) mit dem harten Copolymerisat B), dem oder den Stabilisator(en) und gegebenenfalls den weiteren Komponenten C), D), E), F), G) in einer Mischvorrichtung, wobei eine im Wesentlichen schmelzflüssige Polymermischung entsteht,
3) schnelles Abkühlen der im Wesentlichen schmelzflüssigen Polymermischung innerhalb von 10 Sekunden.

7. Verfahren zur Herstellung der thermoplastischen Formmassen gemäß einem der Ansprüche 2, 3 oder 5, **gekennzeichnet durch**
1) Herstellen des Pfropfcopolymerisates A') nach dem Verfahren der Emulsionspolymerisation,
2) gegebenenfalls Vermischen des Pfropfcopolymerisates A') mit dem harten Copolymerisat B') und/oder B"), dem oder den Stabilisator(en) und den weiteren Komponenten C), D), E), F), G) in einer Mischvorrichtung, wobei eine im Wesentlichen schmelzflüssige Polymermischung entsteht,
3) schnelles Abkühlen der im Wesentlichen schmelzflüssigen Polymermischung innerhalb von 10 Sekunden.

8. Verfahren zur Herstellung der thermoplastischen Formmassen gemäß einem der Ansprüche 1, 3 oder 4, wobei die Komponenten D) und E) in den Formmassen enthalten sind, **gekennzeichnet durch**
1) Herstellen des Pfropfcopolymerisates A) nach dem Verfahren der Emulsionspolymerisation,
2) Zugeben eines Teils oder der Gesamtmenge der Komponente D) und eines Teils oder der Gesamtmenge E) zur wässrigen Dispersion oder Emulsion vor, während oder nach der Polymerisationsreaktion von A),
3) Zugeben des verbliebenen Teils, sofern vorhanden, der Komponenten D) und E) in eine Mischvorrichtung, in der die Komponenten A), B), der oder die Stabilisator(en) und gegebenenfalls C), E), F), G) vermischt werden, wobei eine im Wesentlichen schmelzflüssige Polymermischung entsteht,
4) schnelles Abkühlen der im Wesentlichen schmelzflüssigen Polymermischung innerhalb 10 Sekunden.

9. Verfahren zur Herstellung der thermoplastischen Formmassen gemäß einem der Ansprüche 2, 3 oder 5, wobei die Komponenten D) und E) in den Formmassen enthalten sind, **gekennzeichnet durch**
1) Herstellen des Pfropfcopolymerisates A') nach dem Verfahren der Emulsionspolymerisation,
2) Zugeben eines Teils oder der Gesamtmenge der Komponente D) und eines Teils oder der Gesamtmenge E) zur wässrigen Dispersion oder Emulsion vor, während oder nach der Polymerisationsreaktion von A'),
3) Zugeben des verbliebenen Teils, sofern vorhanden, der Komponenten D) und E) in eine Mischvorrichtung, in der die Komponenten A'), der oder die Stabilisator(en) und gegebenenfalls B'), B"), C), E), F), G) vermischt werden, wobei eine im Wesentlichen schmelzflüssige Polymermischung entsteht,
4) schnelles Abkühlen der im Wesentlichen schmelzflüssigen Polymermischung innerhalb 10 Sekunden.

10. Verwendung der thermoplastischen Formmassen gemäß den Ansprüchen 1 bis 5 zur Herstellung von Formkörpern, Fasern oder Folien.

11. Formkörper, Fasern oder Folien aus den thermoplastischen Formmassen gemäß einem der Ansprüche 1 bis 5.

## Claims

1. A thermoplastic molding composition, comprising, based in each case on components A) and B),
A) from to 5 to 70% by weight of at least one graft copolymer A), composed of, based in each case on A),
a1) from 10 to 90% by weight of at least one elastomeric graft base with a glass transition temperature below 0°C,
a2) from 10 to 90% by weight of at least one graft composed of, based on a2),
a21) from 50 to 100% by weight of at least one styrene compound,
a22) from 0 to 50% by weight of acrylonitrile, methacrylonitrile, or a mixture of these,
a23) from 0 to 50% by weight of at least one other monoethylenically unsaturated monomer,
B) from 30 to 90% by weight of a hard copolymer composed of, based in each case on B),
b1) from 50 to 100% by weight of at least one styrene compound,
b2) from 0 to 50% by weight of acrylonitrile, methacrylonitrile, or a mixture of these,
b3) from 0 to 50% by weight of at least one other monoethylenically unsaturated monomer,
which also comprises at least one stabilizer, composed of
(1) one or more polyisocyanates having an average of from 2.2 to 8 isocyanate groups per molecule,
(2) and at least one active ingredient group (2a), (2b), or (2c), having
(2a) from 0.1 to 1.0 mol of one or more active ingredient groups, per mole of isocyanate groups, based on a phenol,
(2b) from 0.1 to 1.0 mol of one or more active ingredient groups, per mole of isocyanate groups, based on sterically hindered amines,
(2c) from 0.1 to 1.0 mol in total of at least two different active ingredient groups, per mole of isocyanate groups, where one active ingredient group is based on phenol and the other active ingredient group is based on sterically hindered amines,
where the active ingredient group(s) protect plastics from damage via heat, UV radiation, oxidation, hydrolysis, or mechanical action during processing, and
(3) per mole of isocyanate groups, from 0 to 0.9 mol of one or more auxiliary groups which modify the properties of the stabilizer, where the auxiliary groups have been coupled to the polyisocyanates by way of a functional group B which can react with the isocyanate groups.

2. A thermoplastic molding composition, comprising, based in each case on components A'), B'), and B"),
A') from 5 to 70% by weight of at least one graft copolymer A) composed of, based in each case on A'),
a1') from 10 to 90% by weight of at least one elastomeric graft base with a glass transition temperature below 0°C,
a2') from 10 to 90% by weight of at least one graft composed of, based in each case on a2'),
a21) from 5 to 85% by weight of at least one styrene compound,
a22) from 0 to 50% by weight of acrylonitrile, methacrylonitrile, or a mixture of these,
a23) from 0 to 50% by weight of at least one other monoethylenically unsaturated monomer,
a24) from 15 to 95% by weight of alkyl methacrylate,
B') from 0 to 65% by weight of an alkyl methacrylate polymer, obtainable via polymerization of a mixture, composed of, based in each case on B'),
b1') from 50 to 100% by weight of alkyl methacrylate,
b2') from 0 to 15% by weight of a C1-C8-alkyl acrylate,
b3') from 0 to 50% by weight of at least one other monoethylenically unsaturated monomer,
B") from 0 to 65% by weight of a copolymer, obtainable via polymerization of a mixture, composed of, based in each case on B"),
b1") from 50 to 100% by weight of a vinylaromatic monomer,
b2") from 0 to 50% by weight of acrylonitrile, methacrylonitrile, or a mixture of these,
b3") from 0 to 50% by weight of at least one other monoethylenically unsaturated monomer,
which also comprises at least one stabilizer, composed of
(1) one or more polyisocyanates having an average of from 2.2 to 8 isocyanate groups per molecule,
(2) and at least one active ingredient group (2a), (2b), or (2c), having
(2a) from 0.1 to 1.0 mol of one or more active ingredient groups, per mole of isocyanate groups, based on a phenol,
(2b) from 0.1 to 1.0 mol of one or more active ingredient groups, per mole of isocyanate groups, based on sterically hindered amines,
(2c) from 0.1 to 1.0 mol of at least two different active ingredient groups, per mole of isocyanate groups, where one active ingredient group is based on phenol and the other active ingredient group is based on sterically hindered amines, where the active ingredient group(s) protect plastics from damage via heat, UV radiation, oxidation, hydrolysis, or mechanical action during processing, and
(3) per mole of isocyanate groups, from 0 to 0.9 mol of one or more auxiliary groups which modify the properties of the stabilizer, where the auxiliary groups have been coupled to the polyisocyanates by way of functional groups which can react with the isocyanate groups.

3. The thermoplastic molding composition according to claim 1 or 2, which also comprises the following additives:
C) from 0 to 5% by weight of at least one three-block copolymer X-Y-X having a middle block Y composed of propylene oxide units and having terminal blocks X composed of ethylene oxide units,
D) from 0 to 5% by weight of at least one butylated reaction product of p-cresol with dicyclopentadiene of the formula (I) 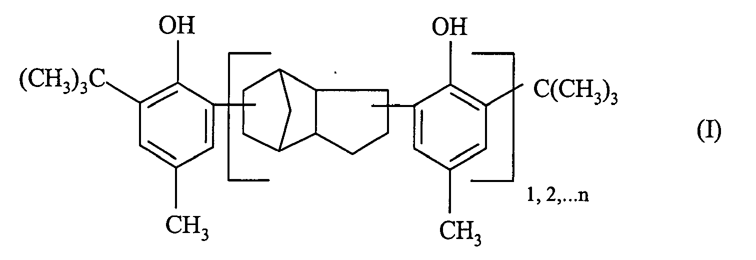 where n ≤ 10,
E) from 0 to 5% by weight of at least one thiocarboxylic ester,
F) from 0 to 5% by weight of at least one alkali metal salt or alkaline earth metal salt of a C₆-C₂₀ carboxylic acid,
G) from 0 to 30% by weight of other conventional additives.

4. The thermoplastic molding composition according to claim 1 or 3, in which the graft base a1) is a polymer composed of, based in each case on a1),
a11) from 60 to 100% by weight of at least one conjugated diene, C₁-C₁₀-alkyl acrylate, or a mixture of these,
a12) from 0 to 35% by weight of at least one other monoethylenically unsaturated monomer,
a13) from 0 to 10% by weight of at least one crosslinking monomer.

5. The thermoplastic molding composition according to claim 2 or 3, in which the graft base a1) is a polymer composed of, based in each case on a1),
a11) from 60 to 100% by weight of at least one conjugated diene, C₁-C₁₀-alkyl acrylate, or a mixture of these,
a12) from 0 to 35% by weight of at least one other monoethylenically unsaturated monomer,
a13) from 0 to 10% by weight of at least one crosslinking monomer.

6. A process for preparation of the thermoplastic molding compositions according to any of claims 1, 3, or 4, which comprises
1) preparation of the graft copolymer A) by the process of emulsion polymerization,
2) mixing of the graft copolymer A) with the hard copolymer B), and with the stabilizer(s), and, if appropriate, with the other components C), D), E), F), G), in a mixing apparatus, the product being a substantially molten polymer mixture,
3) rapid cooling of the substantially molten polymer mixture within a period of 10 seconds.

7. A process for preparation of the thermoplastic molding compositions according to any of claims 2, 3, or 5, which comprises
1) preparation of the graft copolymer A') by the process of emulsion polymerization,
2) if appropriate, mixing of the graft copolymer A') with the hard copolymer B') and/or B"), with the stabilizer(s), and with the other components C), D), E), F), G) in a mixing apparatus, the product being a substantially molten polymer mixture,
3) rapid cooling of the substantially molten polymer mixture within a period of 10 seconds.

8. A process for preparation of the thermoplastic molding compositions according to any of claims 1, 3, or 4, where components D) and E) are present in the molding compositions, which comprises
1) preparation of the graft copolymer A) by the process of emulsion polymerization,
2) addition of a portion or the entire amount of component D) and a portion or the entire amount of E) to the aqueous dispersion or emulsion prior to, during, or after the polymerization reaction of A),
3) addition of any remaining portion of components D) and E) into a mixing apparatus in which components A), B), the stabilizer(s), and, if appropriate, C), E), F), G) are mixed, the product being a substantially molten polymer mixture,
4) rapid cooling of the substantially molten polymer mixture within a period of 10 seconds.

9. A process for preparation of the thermoplastic molding compositions according to any of claims 2, 3, or 5, where components D) and E) are present in the molding compositions, which comprises
1) preparation of the graft copolymer A') by the process of emulsion polymerization,
2) addition of a portion or the entire amount of component D) and a portion or the entire amount of E) to the aqueous dispersion or emulsion prior to, during, or after the polymerization reaction of A'),
3) addition of any remaining portion of components D) and E) into a mixing apparatus in which components A'), the stabilizer(s), and, if appropriate, B'), B"), C), E), F), G) are mixed, the product being a substantially molten polymer mixture,
4) rapid cooling of the substantially molten polymer mixture within a period of 10 seconds.

10. The use of the thermoplastic molding compositions according to claims 1 to 5 for production of moldings, fibers, or foils.

11. A molding, a fiber, or a foil composed of the thermoplastic molding compositions according to any of claims 1 to 5.

## Revendications

1. Masses de moulage thermoplastiques, contenant, à chaque fois par rapport aux composants A) et B),
A) 5 à 70% en poids d'au moins un copolymère greffé A) constitué par, à chaque fois par rapport à A),
a1) 10 à 90% en poids d'au moins une base de greffage élastique caoutchouteuse présentant une température de transition vitreuse inférieure à 0°C,
a2) 10 à 90% en poids d'au moins une charge de greffage constituée par, par rapport à a2),
a21) 50 à 100% en poids d'au moins un composé de styrène,
a22) 0 à 50% en poids d'acrylonitrile, de méthacrylonitrile ou leurs mélanges,
a23) 0 à 50% en poids d'au moins un autre monomère éthyléniquement monoinsaturé,
B) 30 à 90% en poids d'un copolymère dur constitué par, à chaque fois par rapport à B),
b1) 50 à 100% en poids d'au moins un composé de styrène,
b2) 0 à 50% en poids d'acrylonitrile, de méthacrylonitrile ou leurs mélanges,
b3) 0 à 50% en poids d'au moins un autre monomère éthyléniquement monoinsaturé,
**caractérisées en ce que** la masse de moulage thermoplastique contient en outre au moins un stabilisateur, qui est constitué par
(1) un ou plusieurs polyisocyanates contenant en moyenne 2,2 à 8 groupes isocyanate par molécule,
(2) et au moins un groupe de substances actives (2a), (2b) ou (2c) avec
(2a) 0,1 à 1,0 mole d'un ou de plusieurs groupes de substances actives, par mole de groupes isocyanate, à base de phénol,
(2b) 0,1 à 1,0 mole d'un ou de plusieurs groupes de substances actives, par mole de groupes isocyanate, à base d'amines stériquement encombrées,
(2c) 0,1 à 1,0 mole au total d'au moins deux groupes de substances actives différents, par mole de groupes isocyanate, un groupe de substances actives étant à base de phénol et l'autre groupe de substances actives étant à base d'amines stériquement encombrées,
le ou les groupes de substances actives protégeant les matériaux synthétiques contre une dégradation par la chaleur, un rayonnement UV, une oxydation, une hydrolyse ou un effet mécanique lors de la transformation, et
(3) par mole de groupes isocyanate, 0 à 0,9 mole d'un ou de plusieurs groupes auxiliaires, qui modifient les propriétés du stabilisateur, les groupes auxiliaires étant couplés au polyisocyanates via un groupe fonctionnel B qui peut réagir avec les groupes isocyanate.

2. Masses de moulage thermoplastiques, contenant, à chaque fois par rapport aux composants A'), B') et B"),
A') 5 à 70% en poids d'au moins un copolymère greffé A) constitué par, à chaque fois par rapport à A',
a1') 10 à 90% en poids d'au moins une base de greffage élastique caoutchouteuse présentant une température de transition vitreuse inférieure à 0°C,
a2') 10 à 90% en poids d'au moins une charge de greffage constituée par, à chaque fois par rapport à a2'),
a21) 5 à 85% en poids d'au moins un composé de styrène,
a22) 0 à 50% en poids d'acrylonitrile, de méthacrylonitrile ou leurs mélanges,
a23) 0 à 50% en poids d'au moins un autre monomère éthyléniquement monoinsaturé,
a24) 15 à 95% en poids de méthacrylate d'alkyle
B') 0 à 65% en poids d'un polymère de méthacrylate d'alkyle, pouvant être obtenu par polymérisation d'un mélange constitué par, à chaque fois par rapport à B'),
b1') 50 à 100% en poids de méthacrylate d'alkyle,
b2') 0 à 15% en poids d'un ester d'alkyle en C₁-C₈ de l'acide acrylique,
b3') 0 à 50% en poids d'au moins un autre monomère éthyléniquement monoinsaturé,
B'') 0 à 65% en poids d'un copolymère, pouvant être obtenu par polymérisation d'un mélange constitué par, à chaque fois par rapport à B''),
b1'') 50 à 100% en poids d'un monomère aromatique de vinyle,
b2'') 0 à 50% en poids d'acrylonitrile, de méthacrylonitrile ou leurs mélanges,
b3'') 0 à 50% en poids d'au moins un autre monomère éthyléniquement monoinsaturé,
**caractérisées en ce que** la masse de moulage thermoplastique contient en outre au moins un stabilisateur, qui est constitué par
(1) un ou plusieurs polyisocyanates contenant en moyenne 2,2 à 8 groupes isocyanate par molécule,
(2) et au moins des groupes de substances actives (2a), (2b) ou (2c) avec
(2a) 0,1 à 1,0 mole d'un ou de plusieurs groupes de substances actives, par mole de groupes isocyanate, à base de phénol,
(2b) 0,1 à 1,0 mole d'un ou de plusieurs groupes de substances actives, par mole de groupes isocyanate, à base d'amines stériquement encombrées,
(2c) 0,1 à 1,0 mole d'au moins deux groupes de substances actives différents, par mole de groupes isocyanate, un groupe de substances actives étant à base de phénol et l'autre groupe de substances actives étant à base d'amines stériquement encombrées,
le ou les groupes de substances actives protégeant les matériaux synthétiques contre une dégradation par la chaleur, un rayonnement UV, une oxydation, une hydrolyse ou un effet mécanique lors de la transformation, et
(3) par mole de groupes isocyanate, 0 à 0,9 mole d'un ou de plusieurs groupes auxiliaires, qui modifient les propriétés du stabilisateur, les groupes auxiliaires étant couplés au polyisocyanate via des groupes fonctionnels qui peuvent réagir avec les groupes isocyanate.

3. Masses de moulage thermoplastiques selon la revendication 1 ou 2, **caractérisées en ce que** les masses de moulage thermoplastiques contiennent en outre les additifs suivants :
C) 0 à 5% en poids d'au moins un copolymère à trois blocs X-Y-X avec un bloc central Y constitué par des unités d'oxyde de propylène et des blocs terminaux X constitués par des unités d'oxyde d'éthylène,
D) 0 à 5% en poids d'au moins un produit de réaction butylé du p-crésol avec du dicyclopentadiène de formule (I) 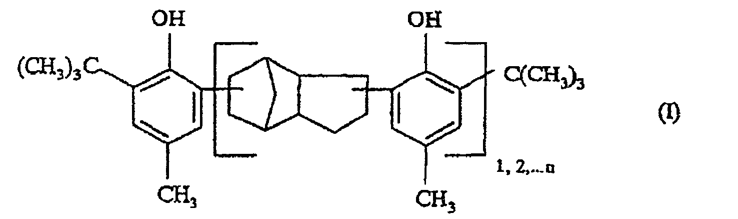 avec n ≤ 10,
E) 0 à 5% en poids d'au moins un ester de l'acide thiocarboxylique,
F) 0 à 5% en poids d'au moins un sel de métal alcalin ou alcalino-terreux d'un acide C₆-C₂₀-carboxylique,
G) 0 à 30% en poids d'autres additifs usuels.

4. Masses de moulage thermoplastiques selon l'une quelconque des revendications 1 ou 3, dans lesquelles la base de greffage a1) est un polymère constitué par, à chaque fois par rapport à a1),
a11) 60 à 100% en poids d'au moins un diène conjugué, d'acrylate d'alkyle en C₁-C₁₀ ou leurs mélanges,
a12) 0 à 35% en poids d'au moins un autre monomère éthyléniquement monoinsaturé,
a13) 0 à 10% en poids d'au moins un monomère réticulant.

5. Masses de moulage thermoplastiques selon l'une quelconque des revendications 2 ou 3, dans lesquelles la base de greffage a1) est un polymère constitué par, à chaque fois par rapport à a1),
a11) 60 à 100% en poids d'au moins un diène conjugué, d'acrylate d'alkyle en C₁-C₁₀ ou leurs mélanges,
a12) 0 à 35% en poids d'au moins un autre monomère éthyléniquement monoinsaturé,
a13) 0 à 10% en poids d'au moins un monomère réticulant.

6. Procédé pour la préparation des masses de moulage thermoplastiques selon l'une quelconque des revendications 1, 3 ou 4, **caractérisé par**
1) la préparation du copolymère greffé A) selon le procédé de polymérisation en émulsion,
2) le mélange du copolymère greffé A) avec le copolymère dur B), le ou les stabilisateurs et le cas échéant les autres composants C), D), E), F), G) dans un dispositif de mélange, avec formation d'un mélange de polymères essentiellement sous forme de masse fondue liquide,
3) le refroidissement rapide du mélange de polymères essentiellement sous forme de masse fondue liquide en 10 secondes.

7. Procédé pour la préparation des masses de moulage thermoplastiques selon l'une quelconque des revendications 2, 3 ou 5, **caractérisé par**
1) la préparation du copolymère greffé A') selon le procédé de polymérisation en émulsion,
2) le cas échéant le mélange du copolymère greffé A') avec le copolymère dur B') et/ou B "), le ou les stabilisateurs et le cas échéant les autres composants C), D), E), F), G) dans un dispositif de mélange, avec formation d'un mélange de polymères essentiellement sous forme de masse fondue liquide,
3) le refroidissement rapide du mélange de polymères essentiellement sous forme de masse fondue liquide en 10 secondes.

8. Procédé pour la préparation des masses de moulage thermoplastiques selon l'une quelconque des revendications 1, 3 ou 4, les composants D) et E) étant contenus dans les masses de moulage, **caractérisé par**
1) la préparation du copolymère greffé A) selon le procédé de polymérisation en émulsion,
2) l'addition d'une partie ou de la quantité totale du composant D) et d'une partie ou de la quantité totale de E) à la dispersion ou l'émulsion aqueuse avant, pendant ou après la réaction de polymérisation de A),
3) l'addition de la partie résiduelle, le cas échéant, des composants D) et E) dans un dispositif de mélange, dans lequel les composants A), B), le ou les stabilisateurs et le cas échéant C), E), F), G) sont mélangés, avec formation d'un mélange de polymères essentiellement sous forme d'une masse fondue liquide,
4) le refroidissement rapide du mélange de polymères essentiellement sous forme de masse fondue liquide en 10 secondes.

9. Procédé pour la préparation des masses de moulage thermoplastiques selon l'une quelconque des revendications 2, 3 ou 5, les composants D) et E) étant contenus dans les masses de moulage, **caractérisé par**
1) la préparation du copolymère greffé A') selon le procédé de polymérisation en émulsion,
2) l'addition d'une partie ou de la quantité totale du composant D) et d'une partie ou de la quantité totale de E) à la dispersion ou l'émulsion aqueuse avant, pendant ou après la réaction de polymérisation de A'),
3) l'addition de la partie résiduelle, le cas échéant, des composants D) et E) dans un dispositif de mélange, dans lequel les composants A'), le ou les stabilisateurs et le cas échéant B'), B''), C), E), F), G) sont mélangés, avec formation d'un mélange de polymères essentiellement sous forme d'une masse fondue liquide,
4) le refroidissement rapide du mélange de polymères essentiellement sous forme de masse fondue liquide en 10 secondes.

10. Utilisation des masses de moulage thermoplastiques selon les revendications 1 à 5 pour la préparation de corps façonnés, de fibres ou de feuilles.

11. Corps façonnés, fibres ou feuilles en masses de moulage thermoplastiques selon l'une quelconque des revendications 1 à 5.
